# EUROPEAN PATENT APPLICATION

(11) **EP 4 398 347 A1**
(43) Date of publication of application: **10.07.2024**
(21) Application number: 22864301.1
(22) Date of filing: 19.08.2022
(51) Int. Cl.: H01M 4/62, C08L 9/02, C08L 61/18, H01M 4/13, H01M 4/139

(54) **BINDER COMPOSITION FOR ELECTROMECHANICAL ELEMENT POSITIVE ELECTRODE, CONDUCTIVE MATERIAL DISPERSION FOR ELECTROMECHANICAL ELEMENT POSITIVE ELECTRODE, SLURRY COMPOSITION FOR ELECTROMECHANICAL ELEMENT POSITIVE ELECTRODE, POSITIVE ELECTRODE FOR ELECTROMECHANICAL ELEMENT, AND ELECTROMECHANICAL ELEMENT**

(30) Priority: 31.08.2021 JP 2021141957
(71) Applicant: Zeon Corporation, Tokyo 100-8246 (JP)
(72) Inventor: ITO Yukie, Tokyo 100-8246 (JP); TAKAHASHI Naoki, Tokyo 100-8246 (JP)
(74) Representative: Maiwald GmbH
(86) International application number: PCT/JP2022/031437
(87) International publication number: WO 2023/032717

(57) **Abstract**

A binder composition for an electrochemical device positive electrode contains a polymer and an organic compound. The polymer includes a nitrile group-containing monomer unit and an alkylene structural unit. The organic compound includes not fewer than 2 and not more than 15 aromatic hydrocarbon monocycles and not fewer than 2 and not more than 15 sulfur atom-containing functional groups, on average, per one molecule.

## Description

### TECHNICAL FIELD

The present disclosure relates to a binder composition for an electrochemical device positive electrode, a conductive material dispersion liquid for an electrochemical device positive electrode, a slurry composition for an electrochemical device positive electrode, a positive electrode for an electrochemical device, and an electrochemical device.

### BACKGROUND

Electrochemical devices such as lithium ion secondary batteries, lithium ion capacitors, and electric double-layer capacitors have characteristics such as compact size, light weight, high energy-density, and the ability to be repeatedly charged and discharged, and are used in a wide range of applications. Consequently, in recent years, studies have been made to improve battery members such as electrodes with the aim of achieving even higher electrochemical device performance.

An electrode used in an electrochemical device normally includes a current collector and an electrode mixed material layer formed on the current collector. This electrode mixed material layer is formed by, for example, applying a slurry composition for an electrode containing an electrode active material, a conductive material, a binder-containing binder composition, and so forth onto the current collector, and then drying the applied slurry composition for an electrode.

Therefore, the improvement of electrochemical device performance through enhancement of polymer components such as binders has been studied in recent years.

As one example, Patent Literature (PTL) 1 proposes using hydrogenated nitrile butadiene rubber as a polymer component. According to PTL 1, the hydrogenated nitrile butadiene rubber functions as a dispersant for dispersing a conductive material such as carbon nanotubes (hereinafter, also abbreviated as "CNTs"). Moreover, in PTL 1, a method in which a conductive material is premixed with the above-described copolymer to obtain a conductive material dispersion liquid and then the resultant conductive material dispersion liquid is combined with an electrode active material, etc. to produce a slurry composition for an electrode is adopted with the aim of sufficiently dispersing the conductive material.

### CITATION LIST

### Patent Literature

PTL 1: JP2018-534747A

### SUMMARY

### (Technical Problem)

However, there is room for improvement of a positive electrode formed using the conventional technique described above in terms of causing an electrochemical device including the positive electrode to display excellent low-temperature output characteristics.

Accordingly, one object of the present disclosure is to provide a binder composition for an electrochemical device positive electrode, a conductive material dispersion liquid for an electrochemical device positive electrode, and a slurry composition for an electrochemical device positive electrode that are capable of forming a positive electrode that can cause an electrochemical device to display excellent low-temperature output characteristics.

Another object of the present disclosure is to provide an electrochemical device that can display excellent low-temperature output characteristics.

### (Solution to Problem)

The inventors conducted diligent investigation with the aim of solving the problem set forth above. The inventors discovered that by using a binder composition that contains a specific polymer and a specific organic compound, it is possible to produce a positive electrode that can cause an electrochemical device to display excellent low-temperature output characteristics, and, in this manner, completed the present disclosure.

Specifically, the present disclosure aims to advantageously solve the problem set forth above, and [1] a presently disclosed binder composition for an electrochemical device positive electrode comprises a polymer and an organic compound, wherein the polymer includes a nitrile group-containing monomer unit and an alkylene structural unit, and the organic compound includes not fewer than 2 and not more than 15 aromatic hydrocarbon monocycles and not fewer than 2 and not more than 15 sulfur atom-containing functional groups, on average, per one molecule.

Through a positive electrode that is produced using a binder composition containing the specific polymer described above and the specific organic compound described above in this manner, it is possible to cause an electrochemical device to display excellent low-temperature output characteristics.

Note that the term "monomer unit" as used in the present disclosure refers to "a structural unit (repeating unit) derived from the monomer that is included in a polymer obtained using that monomer". Also note that the term "alkylene structural unit" as used in the present disclosure refers to "a structural unit composed of only an alkylene structure represented by a general formula -CₙH₂ₙ- (n is an integer of 2 or more)". Moreover, the proportion in which a polymer includes each structural unit can be measured by a nuclear magnetic resonance (NMR) method such as ¹H-NMR or ¹³C-NMR.

Furthermore, the average number of aromatic hydrocarbon monocycles per one molecule of an organic compound and the average number of sulfur atom-containing functional groups per one molecule of an organic compound that are referred to in the present disclosure can be measured by methods described in the EXAMPLES section of the present specification.

[2] The binder composition for an electrochemical device positive electrode according to the foregoing [1] may further comprise a solvent.

[3] In the binder composition for an electrochemical device positive electrode according to the foregoing [1] or [2], the polymer preferably has a weight-average molecular weight of 500,000 or less.

When the weight-average molecular weight of the polymer is not more than the specific value set forth above, dispersibility of a fibrous conductive material in a conductive material dispersion liquid that is produced using the binder composition can be improved.

Note that the weight-average molecular weight of a polymer referred to in the present disclosure can be measured by a method described in the EXAMPLES section of the present specification.

[4] In the binder composition for an electrochemical device positive electrode according to any one of the foregoing [1] to [3], the polymer preferably has a sulfur content of 500 mass ppm or more.

When the sulfur content of the polymer is not less than the specific value set forth above, dispersibility of a fibrous conductive material in a conductive material dispersion liquid that is produced using the binder composition can be improved.

Note that the sulfur content of a polymer can be measured by a method described in the EXAMPLES section of the present specification.

[5] In the binder composition for an electrochemical device positive electrode according to any one of the foregoing [1] to [4], the sulfur atom-containing functional groups preferably include either or both of a sulfonic acid group and a salt thereof.

When the sulfur atom-containing functional groups include either or both of a sulfonic acid group and a salt thereof, dispersibility of a fibrous conductive material in a conductive material dispersion liquid that is produced using the binder composition can be improved, and low-temperature output characteristics of an electrochemical device can be further improved.

[6] In the binder composition for an electrochemical device positive electrode according to any one of the foregoing [1] to [5], the organic compound preferably has a weight-average molecular weight of 5,000 or less.

When the weight-average molecular weight of the organic compound is not more than the specific value set forth above, dispersibility of a fibrous conductive material in a conductive material dispersion liquid that is produced using the binder composition and stability of a slurry composition for a positive electrode that is produced using the conductive material dispersion liquid can be improved, and low-temperature output characteristics of an electrochemical device can be further improved.

Note that the weight-average molecular weight of an organic compound referred to in the present disclosure can be measured by a method described in the EXAMPLES section of the present specification.

[7] In the binder composition for an electrochemical device positive electrode according to any one of the foregoing [1] to [6], a mass ratio of the polymer and the organic compound, in terms of polymer/organic compound, is preferably not less than 60/40 and not more than 999/1.

When the mass ratio of the polymer and the organic compound (polymer/organic compound) is within the specific range set forth above, dispersibility of a fibrous conductive material in a conductive material dispersion liquid that is produced using the binder composition, stability of a slurry composition for a positive electrode that is produced using the conductive material dispersion liquid, and cycle characteristics of an electrochemical device can be improved, and low-temperature output characteristics of the electrochemical device can be further improved.

Moreover, the present disclosure aims to advantageously solve the problem set forth above, and [8] a presently disclosed conductive material dispersion liquid for an electrochemical device positive electrode comprises: a fibrous conductive material; a dispersion medium; and the binder composition for an electrochemical device positive electrode according to any one of the foregoing [1] to [7].

Through a positive electrode that is produced using a conductive material dispersion liquid containing a fibrous conductive material, a dispersion medium, and any one of the binder compositions set forth above in this manner, it is possible to cause an electrochemical device to display excellent low-temperature output characteristics.

[9] In the conductive material dispersion liquid for an electrochemical device positive electrode according to the foregoing [8], it is preferable that the fibrous conductive material is a fibrous carbon material, and the fibrous carbon material has a ratio of D band peak intensity relative to G band peak intensity of 2.0 or less in a Raman spectrum.

When the ratio of D band peak intensity relative to G band peak intensity in a Raman spectrum of the fibrous carbon material that is used as the fibrous conductive material is not more than the specific value set forth above, dispersibility of the fibrous conductive material in the conductive material dispersion liquid, stability of a slurry composition for a positive electrode that is produced using the conductive material dispersion liquid, and cycle characteristics of an electrochemical device can be improved, and low-temperature output characteristics of the electrochemical device can be further improved.

Note that the ratio (D/G ratio) of D band peak intensity relative to G band peak intensity in a Raman spectrum of a fibrous carbon material can be measured by a method described in the EXAMPLES section of the present specification.

[10] In the conductive material dispersion liquid for an electrochemical device positive electrode according to the foregoing [8] or [9], the fibrous conductive material is preferably of a bundle type.

By using a fibrous conductive material that is of a bundle type, it is possible to improve dispersibility of the fibrous conductive material in the conductive material dispersion liquid and cycle characteristics of an electrochemical device and also to further improve low-temperature output characteristics of the electrochemical device.

[11] In the conductive material dispersion liquid for an electrochemical device positive electrode according to any one of the foregoing [8] to [10], the fibrous conductive material preferably has a surface acid content of not less than 0.01 mmol/g and not more than 0.20 mmol/g.

When the surface acid content of the fibrous conductive material is within the specific range set forth above, dispersibility of the fibrous conductive material in the conductive material dispersion liquid, stability of a slurry composition for a positive electrode that is produced using the conductive material dispersion liquid, and cycle characteristics of an electrochemical device can be improved, and low-temperature output characteristics of the electrochemical device can be further improved.

[12] In the conductive material dispersion liquid for an electrochemical device positive electrode according to any one of the foregoing [8] to [11], a ratio of surface acid content relative to surface base content of the fibrous conductive material, in terms of surface acid content/surface base content, is preferably not less than 0.10 and not more than 2.5.

When the ratio of surface acid content relative to surface base content (surface acid content/surface base content) of the fibrous conductive material is within the specific range set forth above, dispersibility of the fibrous conductive material in the conductive material dispersion liquid, stability of a slurry composition for a positive electrode that is produced using the conductive material dispersion liquid, and cycle characteristics of an electrochemical device can be improved, and low-temperature output characteristics of the electrochemical device can be further improved.

Note that the surface acid content and surface base content of a fibrous conductive material can be measured by methods described in the EXAMPLES section of the present specification.

Furthermore, the present disclosure aims to advantageously solve the problem set forth above, and [13] a presently disclosed slurry composition for an electrochemical device positive electrode comprises: the conductive material dispersion liquid for an electrochemical device positive electrode according to any one of the foregoing [8] to [12]; and a positive electrode active material.

Through a positive electrode that is produced using a slurry composition for a positive electrode containing any one of the conductive material dispersion liquids set forth above and a positive electrode active material in this manner, it is possible to cause an electrochemical device to display excellent low-temperature output characteristics.

[14] The slurry composition for an electrochemical device positive electrode according to the foregoing [13] preferably further comprises a binder other than the polymer.

By also using a binder other than the specific polymer described above, it is possible to improve peel strength of a positive electrode that is produced using the slurry composition for a positive electrode.

Also, the present disclosure aims to advantageously solve the problem set forth above, and [15] a presently disclosed positive electrode for an electrochemical device comprises a positive electrode mixed material layer formed using the slurry composition for an electrochemical device positive electrode according to the foregoing [13] or [14].

Through an electrode that includes a positive electrode mixed material layer obtained using the slurry composition for a positive electrode set forth above in this manner, it is possible to cause an electrochemical device to display excellent low-temperature output characteristics.

Moreover, the present disclosure aims to advantageously solve the problem set forth above, and [16] a presently disclosed electrochemical device comprises the positive electrode for an electrochemical device according to the foregoing [15].

An electrochemical device that includes the positive electrode set forth above in this manner can display excellent low-temperature output characteristics.

### (Advantageous Effect)

According to the present disclosure, it is possible to provide a binder composition for an electrochemical device positive electrode, a conductive material dispersion liquid for an electrochemical device positive electrode, and a slurry composition for an electrochemical device positive electrode that are capable of forming a positive electrode that can cause an electrochemical device to display excellent low-temperature output characteristics.

Moreover, according to the present disclosure, it is possible to provide an electrochemical device that can display excellent low-temperature output characteristics.

### DETAILED DESCRIPTION

The following provides a detailed description of embodiments of the present disclosure.

The presently disclosed binder composition for an electrochemical device positive electrode (hereinafter, also referred to simply as a "binder composition") can be used in production of the presently disclosed conductive material dispersion liquid for an electrochemical device positive electrode (hereinafter, also referred to simply as a "conductive material dispersion liquid"). Moreover, the presently disclosed conductive material dispersion liquid for an electrochemical device positive electrode can be used in production of the presently disclosed slurry composition for an electrochemical device positive electrode (hereinafter, also referred to simply as a "slurry composition for a positive electrode"). Furthermore, the presently disclosed slurry composition for an electrochemical device positive electrode can be used in formation of a positive electrode of an electrochemical device such as a lithium ion secondary battery. Also, a feature of the presently disclosed electrochemical device is that it includes the presently disclosed positive electrode for an electrochemical device (hereinafter, also referred to simply as a "positive electrode") that is formed using the presently disclosed slurry composition for an electrochemical device positive electrode.

### (Binder composition for electrochemical device positive electrode)

The presently disclosed binder composition is a binder composition that contains a specific polymer and a specific organic compound. The specific polymer includes a nitrile group-containing monomer unit and an alkylene structural unit. Moreover, the specific organic compound is an organic compound that includes both an aromatic hydrocarbon monocycle and a functional group including a sulfur atom. Furthermore, the specific organic compound includes not fewer than 2 and not more than 15 aromatic hydrocarbon monocycles and not fewer than 2 and not more than 15 sulfur atom-containing functional groups, on average, per one molecule.

The specific polymer and the specific organic compound that are contained in the presently disclosed binder composition function as dispersants in a conductive material dispersion liquid. Moreover, by using a binder composition that contains both the specific polymer and the specific organic compound, it is possible to produce a conductive material dispersion liquid in which a fibrous conductive material is dispersed well. Note that dispersibility of a fibrous conductive material in a produced conductive material dispersion liquid is excellent in a situation in which a binder composition containing both the specific polymer and the specific organic compound is used as compared to a situation in which a binder composition containing only one or other of the polymer and organic compound is used. Moreover, by using a conductive material dispersion liquid that is produced using the presently disclosed binder composition containing both the specific polymer and the specific organic compound, it is possible to produce a homogeneous slurry composition for a positive electrode having excellent stability. Furthermore, by using a positive electrode that includes a positive electrode mixed material layer formed using the produced positive electrode slurry composition in an electrochemical device, it is possible to reduce resistance to charge movement, particularly at low temperature, and improve low-temperature output characteristics of the electrochemical device, which is presumed to be because the specific polymer improves electronic conductivity and swells to a suitable degree in electrolyte solution and because the specific organic compound improves wettability of electrolyte solution.

Moreover, by using the positive electrode including a positive electrode mixed material layer formed as described above in an electrochemical device, it is also possible to improve cycle characteristics of the electrochemical device.

Note that the presently disclosed binder composition may optionally further contain a solvent and other components in addition to the specific polymer and the specific organic compound.

### <Polymer>

The polymer is a component that, in an electrode mixed material layer formed using the binder composition, can function as a binder that holds an electrode active material, etc. so that they do not detach from a current collector. Moreover, the polymer can also function as a dispersant that can disperse a fibrous conductive material in a conductive material dispersion liquid that is produced using the binder composition.

### «Chemical composition»

The polymer includes at least a nitrile group-containing monomer unit and an alkylene structural unit as previously described. Note that the polymer may include structural units other than a nitrile group-containing monomer unit and an alkylene structural unit (i.e., other structural units).

### [Nitrile group-containing monomer unit]

Examples of nitrile group-containing monomers that can form a nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. Note that one nitrile group-containing monomer may be used individually, or two or more nitrile group-containing monomers may be used in combination in a freely selected ratio. Of these nitrile group-containing monomers, acrylonitrile is preferable.

The proportional content of nitrile group-containing monomer units in the polymer when all structural units in the polymer are taken to be 100 mass% is preferably 10 mass% or more, more preferably 20 mass% or more, even more preferably 25 mass% or more, and further preferably 30 mass% or more, and is preferably 50 mass% or less, and more preferably 40 mass% or less. When the proportional content of nitrile group-containing monomer units in the polymer is within any of the specific ranges set forth above, dispersibility of a fibrous conductive material in a conductive material dispersion liquid can be further improved.

Note that the proportional content of nitrile group-containing monomer units in the polymer may be 35 mass% or more, or may be 35 mass% or less when all structural units in the polymer are taken to be 100 mass%.

### [Alkylene structural unit]

Although the alkylene structural unit may be linear or branched, it is preferable that the alkylene structural unit is linear (i.e., is a linear alkylene structural unit) from a viewpoint of further improving dispersibility of a fibrous conductive material in a conductive material dispersion liquid. Moreover, the alkylene structural unit preferably has a carbon number of 4 or more (i.e., n in the previously described general formula -CₙH₂ₙ- is preferably an integer of 4 or more).

Examples of methods by which the alkylene structural unit can be introduced into the polymer include, but are not specifically limited to, the following methods (1) and (2).
(1) A method in which a polymer is produced from a monomer composition containing an aliphatic conjugated diene monomer and then the polymer is hydrogenated so as to convert an aliphatic conjugated diene monomer unit to an alkylene structural unit
(2) A method in which a polymer is produced from a monomer composition containing a 1-olefin monomer

Of these methods, method (1) is preferable in terms of ease of production of the polymer.

Examples of aliphatic conjugated diene monomers that can be used in method (1) include conjugated diene compounds having a carbon number of 4 or more such as 1,3-butadiene, isoprene, 2,3-dimethyl-1,3-butadiene, 2-ethyl-1,3-butadiene, and 1,3-pentadiene. Of these aliphatic conjugated diene monomers, 1,3-butadiene is preferable. In other words, the alkylene structural unit is preferably a structural unit obtained through hydrogenation of an aliphatic conjugated diene monomer unit (i.e., is preferably a hydrogenated aliphatic conjugated diene unit), and is more preferably a structural unit obtained through hydrogenation of a 1,3-butadiene monomer unit (i.e., is more preferably a hydrogenated 1,3-butadiene unit). The hydrogenation can be performed by a commonly known method such as described further below.

Examples of 1-olefin monomers that can be used in method (2) include ethylene, propylene, and 1-butene.

Note that in formation of the alkylene structural unit, one aliphatic conjugated diene monomer or 1-olefin monomer may be used individually, or two or more aliphatic conjugated diene monomers or 1-olefin monomers may be used in combination in a freely selected ratio.

Also note that in a case in which the alkylene structural unit is introduced into the polymer by method (1), a conjugated diene monomer unit may remain in the polymer in a case in which aliphatic conjugated diene monomer units have not been completely hydrogenated. In other words, the polymer may include an aliphatic conjugated diene monomer unit as another optional structural unit.

The proportional content of alkylene structural units in the polymer when all structural units in the polymer are taken to be 100 mass% is preferably 30 mass% or more, more preferably 50 mass% or more, and even more preferably 60 mass% or more, and is preferably 80 mass% or less, more preferably 75 mass% or less, and even more preferably 70 mass% or less. When the proportional content of alkylene structural units in the polymer is within any of the specific ranges set forth above, dispersibility of a fibrous conductive material in a conductive material dispersion liquid can be further improved.

Note that the proportional content of alkylene structural units in the polymer may be 65 mass% or more, or may be 65 mass% or less when all structural units in the polymer are taken to be 100 mass%.

Also note that in a case in which the polymer includes an aliphatic conjugated diene monomer unit, the total proportional content of conjugated diene monomer units and alkylene structural units in the polymer preferably satisfies any of the preferred ranges set forth above.

### [Other structural units]

Examples of other structural units include, but are not specifically limited to, a (meth)acrylic acid ester monomer unit and an aromatic vinyl monomer unit. The polymer may include one type of other repeating unit or may include two or more types of other repeating units.

Note that in the present disclosure, "(meth)acryl" is used to indicate "acryl" and/or "methacryl".

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. Note that one (meth)acrylic acid ester monomer may be used individually, or two or more (meth)acrylic acid ester monomers may be used in combination in a freely selected ratio.

Examples of aromatic vinyl monomers that can form an aromatic vinyl monomer unit include aromatic monovinyl monomers such as styrene, α-methylstyrene, p-t-butylstyrene, butoxystyrene, vinyltoluene, chlorostyrene, and vinylnaphthalene. Note that one aromatic vinyl monomer may be used individually, or two or more aromatic vinyl monomers may be used in combination in a freely selected ratio.

From a viewpoint of further improving dispersibility of a fibrous conductive material in a conductive material dispersion liquid, the proportional content of other structural units in the polymer when all structural units in the polymer are taken to be 100 mass% is preferably 30 mass% or less, and more preferably 10 mass% or less. When the proportional content of other structural units is 30 mass% or less, dispersibility of a fibrous conductive material in a conductive material dispersion liquid can be further improved. Note that it may be the case that the polymer does not include other structural units. In other words, the proportional content of other structural units in the polymer may be 0 mass%.

### <<Properties>>

Although no specific limitations are made, it is preferable that the polymer has the following properties.

### [Sulfur content]

The sulfur content of the polymer is preferably 500 mass ppm or more, more preferably 600 mass ppm or more, and even more preferably 800 mass ppm or more, and is preferably 20,000 mass ppm or less, more preferably 10,000 mass ppm or less, even more preferably 6,000 mass ppm or less, and further preferably 5,000 mass ppm or less. When the sulfur content of the polymer is not less than any of the lower limits set forth above, it is possible to inhibit structural viscosity from arising in a conductive material dispersion liquid, lower an initial dispersion TI value, etc., and thereby further improve dispersibility of a fibrous conductive material in the conductive material dispersion liquid. In addition, an increase of internal resistance after cycling of an electrochemical device can be suppressed when the sulfur content of the polymer is not less than any of the lower limits set forth above, which is presumed to be due to the inclusion of sulfur atoms in molecules of the polymer increasing oxidation resistance of the polymer. On the other hand, when the sulfur content of the polymer is not more than any of the upper limits set forth above, low-temperature output characteristics of an electrochemical device can be further improved.

Moreover, the sulfur content of the polymer may be 900 mass ppm or more, or may be 900 mass ppm or less.

Note that the sulfur content of the polymer can be controlled based on the amount of a compound (molecular weight modifier) including a sulfur-containing group such as a mercapto group that is compounded in polymerization, for example.

### [Iodine value]

The iodine value of the polymer is preferably 0.1 mg/100 mg or more, more preferably 1 mg/100 mg or more, and even more preferably 5 mg/100 mg or more, and is preferably 100 mg/100 mg or less, more preferably 90 mg/100 mg or less, and even more preferably 60 mg/100 mg or less. When the iodine value of the polymer is within any of the specific ranges set forth above, dispersibility of a fibrous conductive material in a conductive material dispersion liquid, stability of a slurry composition for a positive electrode, and cycle characteristics of an electrochemical device can be further improved.

Moreover, the iodine value of the polymer may be 10 mg/100 mg or more, or may be 10 mg/100 mg or less.

Note that the "iodine value" of a polymer referred to in the present disclosure can be measured by a method described in the EXAMPLES section of the present specification.

### [Weight-average molecular weight]

The weight-average molecular weight of the polymer is preferably 1,000 or more, more preferably 5,000 or more, even more preferably 10,000 or more, further preferably 20,000 or more, even further preferably 25,000 or more, and particularly preferably 30,000 or more, and is preferably 500,000 or less, more preferably 350,000 or less, even more preferably 250,000 or less, further preferably 200,000 or less, and particularly preferably 180,000 or less. When the weight-average molecular weight of the polymer is not less than any of the lower limits set forth above, low-temperature output characteristics of an electrochemical device can be further improved. On the other hand, when the weight-average molecular weight of the polymer is not more than any of the upper limits set forth above, it is possible to lower an initial dispersion TI value, etc., and thereby further improve dispersibility of a fibrous conductive material in a conductive material dispersion liquid, and to suppress an increase of internal resistance after cycling of an electrochemical device.

Moreover, the weight-average molecular weight of the polymer may be 120,000 or more, or may be 120,000 or less.

### <<Production method>>

No specific limitations are placed on the method by which the polymer is produced. For example, the polymer may be produced by polymerizing a monomer composition containing the above-described monomers in an aqueous solvent and then optionally performing hydrogenation. Note that the proportional content of each monomer in the monomer composition can be set in accordance with the proportional content of each structural unit in the polymer.

The polymerization method is not specifically limited and may, for example, be any of solution polymerization, suspension polymerization, bulk polymerization, and emulsion polymerization. Moreover, the polymerization reaction may be addition polymerization such as ionic polymerization, radical polymerization, or living radical polymerization. Furthermore, a known polymerization initiator such as a redox polymerization initiator including an iron-based compound can be used as a polymerization initiator.

The molecular weight (particularly weight-average molecular weight) of the obtained polymer can be adjusted by using a molecular weight modifier in the polymerization. This molecular weight modifier may, for example, be a compound that includes a sulfur-containing group such as a mercapto group. Examples of compounds including a mercapto group that may be used as a molecular weight modifier include mercapto group-containing compounds having a carbon number of 8 to 12 such as octyl mercaptan, 2,2,4,6,6-pentamethyl-4-heptanethiol, 2,4,4,6,6-pentamethyl-2-heptanethiol, 2,3,4,6,6-pentamethyl-2-heptanethiol, 2,3,4,6,6-pentamethyl-3-heptanethiol, t-dodecyl mercaptan, and n-dodecyl mercaptan; and mercapto group-containing compounds such as 2,2,4,6,6-pentamethyl-4-octanethiol, 2,2,4,6,6,8,8-heptamethyl-4-nonanethiol, bis(2-mercaptoethyl) sulfide, methyl 3-mercaptopropionate, and 1-butanethiol. Of these compounds, mercapto group-containing compounds having a carbon number of 8 to 12 are preferable, and t-dodecyl mercaptan is more preferable.

The amount of a mercapto group-containing compound that is compounded as a molecular weight modifier can be set such that the sulfur content in the obtained polymer is a desired value such as previously described.

Note that in a case in which a polymer having an alkylene structural unit introduced by the previously described method (1) is to be produced, radical polymerization using a redox polymerization initiator that includes an iron-based compound is preferably adopted as the polymerization method of the polymer that is to be hydrogenated (i.e., a polymer including a nitrile group-containing monomer unit and an aliphatic conjugated diene monomer unit). The redox polymerization initiator may be a combination of cumene hydroperoxide, ethylenediaminetetraacetic acid iron monosodium salt, sodium hydroxymethanesulfinate, and ethylenediaminetetraacetic acid tetrasodium salt (EDTA·4Na), or the like, for example, but is not specifically limited thereto. Moreover, in a situation in which the above-described polymer is produced by method (1), a coagulant can be used to perform coagulation after emulsion polymerization, and then collected material can be subjected to hydrogenation (after optionally performing a "metathesis reaction" described below).

The hydrogenation can be performed using a known hydrogenation method such as an oil-layer hydrogenation method or a water-layer hydrogenation method. The catalyst used in the hydrogenation may be any selective hydrogenation catalyst that is commonly known such as a palladium-based catalyst or a rhodium-based catalyst. Two or more of such catalysts may be used in combination.

The hydrogenation of the polymer may be performed by a method described in JP4509792B2, for example. Specifically, the hydrogenation of the polymer may be carried out after a metathesis reaction of the polymer in the presence of a catalyst and a co-olefin.

The catalyst in the metathesis reaction may be a known ruthenium-based catalyst. Of such catalysts, Grubbs' catalysts such as bis(tricyclohexylphosphine)benzylidene ruthenium dichloride and 1,3-bis(2,4,6-trimethylphenyl)-2-(imidazolidinylidene)(dichlorophenylmethylene)(tricyclohexylphosphine)ruth enium are preferable as the catalyst in the metathesis reaction. The co-olefin may be an olefin having a carbon number of 2 to 16 such as ethylene, isobutane, or 1-hexane. Furthermore, a known homogeneous hydrogenation catalyst such as Wilkinson's catalyst ((PPh₃)₃RhCl), for example, can be used as a hydrogenation catalyst in hydrogenation performed after the metathesis reaction.

### <Organic compound>

The specific organic compound is a component that functions as a dispersant that can cause dispersion of a fibrous conductive material in a conductive material dispersion liquid produced using the binder composition. Note that the specific organic compound is presumed to able to adsorb to the surface of a fibrous conductive material and form a steric protective layer as a result of having a chain molecular structure.

Also note that the specific organic compound is considered to be a different component from the specific polymer described above.

### <<Aromatic hydrocarbon monocycle>>

The organic compound includes a specific number of aromatic hydrocarbon monocycles, on average, per one molecule. The term "aromatic hydrocarbon monocycle" as used in the present disclosure refers to an aromatic hydrocarbon monocycle that forms an aromatic ring structure.

The term "aromatic ring structure" refers to a cyclic structure having aromaticity in a broad sense according to Huckel's rule. In other words, "aromatic ring structure" refers to both a cyclic conjugated structure having 4n+2 π-electrons (i.e., an aromatic hydrocarbon ring structure) and a structure displaying aromaticity through the contribution of a lone pair of electrons of a heteroatom (sulfur, oxygen, nitrogen, etc.) to a π-electron system (i.e., an aromatic heterocyclic structure) such as a carbazole ring.

Examples of aromatic hydrocarbon ring structures that include an aromatic hydrocarbon monocycle include structures that are formed of one aromatic hydrocarbon monocycle such as a benzene ring; structures that are formed of two aromatic hydrocarbon monocycles such as a naphthalene ring; and structures that are formed of three aromatic hydrocarbon monocycles such as an anthracene ring. In particular, the organic compound preferably includes an aromatic hydrocarbon ring structure formed of two aromatic hydrocarbon monocycles from a viewpoint of affinity with a solvent or fibrous conductive material, and more preferably includes a naphthalene ring.

Moreover, examples of aromatic heterocyclic structures that include an aromatic hydrocarbon monocycle include a carbazole ring. It should be noted that among the three monocycles of a carbazole ring, the one five-membered heterocycle that partially shares a structure with two benzene rings is considered to not correspond to an "aromatic hydrocarbon monocycle" in the present disclosure. Accordingly, a carbazole ring is treated as a structure including only two aromatic hydrocarbon monocycles in one molecule of the organic compound. Also note that aromatic heterocyclic structures such as a pyrrole ring, a furan ring, a thiophene ring, an imidazole ring, and a pyridine ring are structures formed of only aromatic heterocycles including nitrogen (N), oxygen (O), sulfur (S), or the like and thus are considered to not include an aromatic hydrocarbon monocycle in the present disclosure.

Moreover, a monocycle forming a ring structure that is a ring structure other than the aromatic ring structures described above and that at least partially shares a structure with an aromatic ring structure is considered to not correspond to an "aromatic hydrocarbon monocycle".

For example, among the two rings forming a benzocyclobutene ring, the four-membered ring that partially shares a structure with the one benzene ring is considered to not correspond to an "aromatic hydrocarbon monocycle" in the present disclosure. Accordingly, a benzocyclobutene ring is treated as a structure including one benzene ring (i.e., a structure including only one aromatic hydrocarbon monocycle) in one molecule of the organic compound. Likewise, among the three monocycles forming a fluorene ring, for example, the one five-membered ring that partially shares a structure with two benzene rings is considered to not correspond to an "aromatic hydrocarbon monocycle" in the present disclosure. Accordingly, a fluorene ring is treated as a structure including two benzene rings (i.e., a structure including only two aromatic hydrocarbon monocycles) in one molecule of the organic compound.

The organic compound should include an aromatic ring structure described above such that the organic compound includes a specific number of aromatic hydrocarbon monocycles, on average, per one molecule, and the organic compound may include one or a plurality of a single type of aromatic ring structure or may include one or a plurality of a plurality of types of aromatic ring structures.

The organic compound is required to include 2 or more aromatic hydrocarbon monocycles, on average, per one molecule, and preferably includes 3 or more, more preferably 4 or more, and even more preferably 5 or more aromatic hydrocarbon monocycles, on average, per one molecule. Moreover, the organic compound is required to include 15 or fewer aromatic hydrocarbon monocycles, on average, per one molecule, and preferably includes 14 or fewer, more preferably 12 or fewer, and even more preferably 10 or fewer aromatic hydrocarbon monocycles, on average, per one molecule. When the average number of aromatic hydrocarbon monocycles per one molecule of the organic compound is not less than any of the lower limits set forth above, dispersibility of a fibrous conductive material in a conductive material dispersion liquid can be improved, and low-temperature output characteristics of an electrochemical device can also be improved. On the other hand, when the average number of aromatic hydrocarbon monocycles per one molecule of the organic compound is not more than any of the upper limits set forth above, dispersibility of a fibrous conductive material in a conductive material dispersion liquid and stability of a slurry composition for a positive electrode can be improved, and low-temperature output characteristics of an electrochemical device can also be improved.

Moreover, the organic compound may include 6 or more aromatic hydrocarbon monocycles, on average, per one molecule, or may include 6 or fewer aromatic hydrocarbon monocycles, on average, per one molecule.

Note that the average number of aromatic hydrocarbon monocycles per one molecule of an organic compound can be determined by ¹H-NMR measurement.

### «Functional group including sulfur atom»

The organic compound includes a specific number of sulfur atom-containing functional groups (hereinafter, also abbreviated as "sulfur atom-containing functional groups"), on average, per one molecule.

Examples of sulfur atom-containing functional groups include a sulfonic acid group (-SO₃H [also referred to as a sulfo group]) and salts thereof (for example, a sodium sulfonate group [-SO₃Na]); a thiol group (-SH); an acylthio group (-S-CO-R; R represents any substituent [with a proviso that a nitrogen atom and/or a functional group including a nitrogen atom are excluded]); a sulfonyl group (-SO₂-); a sulfide group (-S-); and polysulfide groups (-(S)ₙ-) such as a disulfide group (-S-S-) and a tetrasulfide group (-S-S-S-S-). Moreover, a functional group that includes an aromatic heterocyclic structure including a sulfur atom such as a thienyl group, a thiazolidine group, an isothiazolidine group, a thiazole group, or an isothiazole group may, for example, be included as a sulfur atom-containing functional group.

Of these examples, a sulfonic acid group and salts thereof are preferable as a sulfur atom-containing functional group from a viewpoint of further improving dispersibility of a fibrous conductive material in a conductive material dispersion liquid and low-temperature output characteristics of an electrochemical device, and a sodium sulfonate group (-SO₃Na) is more preferable as a sulfur atom-containing functional group.

Note that the organic compound may include just one of these types of functional groups or may include a plurality of these types of functional groups.

Also note that even when a sulfur atom-containing functional group such as described above includes a plurality of sulfur atoms, this group is still treated as one "functional group including a sulfur atom" in one molecule of the organic compound. For example, a disulfide group (-S-S-) that includes two sulfur atoms is treated as one "functional group including a sulfur atom" in one molecule of the organic compound.

The organic compound is required to include 2 or more sulfur atom-containing functional groups, on average, per one molecule, and preferably includes 3 or more sulfur atom-containing functional groups, on average, per one molecule. Moreover, the organic compound is required to include 15 or fewer sulfur atom-containing functional groups, on average, per one molecule, and preferably includes 10 or fewer, more preferably 7 or fewer, even more preferably 6 or fewer, and further preferably 5 or fewer sulfur atom-containing functional groups, on average, per one molecule. When the average number of sulfur atom-containing functional groups per one molecule of the organic compound is not less than any of the lower limits set forth above, dispersibility of a fibrous conductive material in a conductive material dispersion liquid can be improved, and low-temperature output characteristics of an electrochemical device can also be improved. On the other hand, when the average number of sulfur atom-containing functional groups per one molecule of the organic compound is not more than any of the upper limits set forth above, dispersibility of a fibrous conductive material in a conductive material dispersion liquid and stability of a slurry composition for a positive electrode can be improved, and low-temperature output characteristics of an electrochemical device can also be improved.

Moreover, the organic compound may include 3 or fewer sulfur atom-containing functional groups, on average, per one molecule.

Note that the average number of sulfur atom-containing functional groups per one molecule of an organic compound can be determined by ¹³C-NMR measurement.

Also note that the specific organic compound in the present disclosure may be one organic compound used individually or may be two or more organic compounds used as a mixture in a freely selected ratio so long as the average numbers of aromatic hydrocarbon monocycles and sulfur atom-containing functional groups per one molecule are within any of the specific ranges set forth above.

### <<Weight-average molecular weight>>

The weight-average molecular weight of the organic compound is preferably 300 or more, more preferably 500 or more, and even more preferably 600 or more, and is preferably 5,000 or less, more preferably 3,000 or less, even more preferably 1,800 or less, further preferably 1,600 or less, and even further preferably 1,000 or less. When the weight-average molecular weight of the organic compound is not less than any of the lower limits set forth above, dispersibility of a fibrous conductive material in a conductive material dispersion liquid can be further improved. On the other hand, when the weight-average molecular weight of the organic compound is not more than any of the upper limits set forth above, dispersibility of a fibrous conductive material in a conductive material dispersion liquid and stability of a slurry composition for a positive electrode can be further improved, and low-temperature output characteristics of an electrochemical device can also be further improved.

Moreover, the weight-average molecular weight of the organic compound may be 750 or more, or may be 750 or less.

### <<Production method of organic compound>>

No specific limitations are placed on the method by which the specific organic compound is produced so long as an organic compound including the above-described specific numbers of aromatic hydrocarbon monocycles and sulfur atom-containing functional groups, on average, per one molecule is obtained. Examples of methods that can be adopted include:
(1) a method in which a monomer including an aromatic hydrocarbon monocycle and a monomer including a sulfur-containing functional group are polymerized or in which a monomer including both an aromatic hydrocarbon monocycle and a sulfur atom-containing functional group is polymerized to obtain a polymer as an organic compound (polymerization method); and
(2) a method in which an aromatic compound including a sulfur atom-containing functional group that serves as a compound including both an aromatic hydrocarbon monocycle and a sulfur atom-containing functional group is subjected to addition condensation with an aldehyde such as formaldehyde (formalin), acetaldehyde, or butyraldehyde to obtain an aldehyde condensate of the aromatic compound including a sulfur atom-containing functional group as an organic compound (addition condensation method).

From a viewpoint of further improving dispersibility of a fibrous conductive material in a conductive material dispersion liquid, stability of a slurry composition for a positive electrode, and low-temperature output characteristics and cycle characteristics of an electrochemical device, it is preferable to use an aldehyde condensate of an aromatic compound including a sulfur atom-containing functional group that is produced by the addition condensation method (2) described above as the organic compound.

Note that an organic compound obtained as a polymer by the polymerization method (1) described above is considered to be a different component to the specific polymer described above (polymer including a nitrile group-containing monomer unit and an alkylene structural unit).

The following describes the polymerization method (1) and the addition condensation method (2) in detail.

### {(1) Polymerization method}

In the polymerization method (1), a monomer including an aromatic hydrocarbon monocycle and a monomer including a sulfur atom-containing functional group are polymerized or a monomer including both an aromatic hydrocarbon monocycle and a sulfur atom-containing functional group is polymerized to obtain a polymer. The obtained polymer can be used in that form as the organic compound in production of the binder composition, or a salt of the polymer, such as a sodium salt, that is obtained by neutralizing the obtained polymer through addition of a basic aqueous solution, such as sodium hydroxide aqueous solution, can be used as the organic compound in production of the binder composition.

The monomer including an aromatic hydrocarbon monocycle may be a monomer including one aromatic hydrocarbon monocycle such as styrene; a monomer including two aromatic hydrocarbon monocycles such as vinylnaphthalene (1-vinylnaphthalene or 2-vinylnaphthalene), vinyl fluorene, or vinylcarbazole; a monomer including three aromatic hydrocarbon monocycles such as vinyl anthracene; or the like. In particular, from a viewpoint of affinity with a solvent or fibrous conductive material, it is preferable to use a monomer including two aromatic hydrocarbon monocycles, and more preferable to use vinylnaphthalene.

The monomer including a sulfur atom-containing functional group may be an olefin sulfonic acid such as vinyl sulfonic acid (ethylene sulfonic acid), allyl sulfonic acid, or methallyl sulfonic acid or a salt thereof; acrylamidodimethylpropane sulfonic acid or a salt thereof; or the like. In particular, from a viewpoint of adsorption ability with respect to a fibrous conductive material and polymerizability with the monomer including an aromatic hydrocarbon monocycle, it is preferable to use allyl sulfonic acid or a salt thereof.

The monomer including both an aromatic hydrocarbon monocycle and a sulfur atom-containing functional group may be an aromatic sulfonic acid such as styrene sulfonic acid, vinylnaphthalene monosulfonic acid, vinylnaphthalene disulfonic acid, vinylnaphthalene trisulfonic acid, vinylanthracene monosulfonic acid, vinylanthracene disulfonic acid, or vinylanthracene trisulfonic acid, for example.

Note that a monomer other than the above described monomers may be used in the polymerization method (1) to the extent that the desired effects according to the present disclosure are obtained.

In the polymerization method (1), the organic compound can be obtained as a polymer formed through polymerization of a monomer composition containing the monomers described above.

The proportional content of each monomer in the monomer composition can be adjusted as appropriate such that the organic compound obtained as a polymer includes the above-described specific numbers of aromatic hydrocarbon monocycles and sulfur atom-containing functional groups, on average, per one molecule.

The method of polymerization is not specifically limited and can be any of solution polymerization, suspension polymerization, bulk polymerization, and emulsion polymerization. A known emulsifier and/or polymerization initiator can be used as necessary in each of these polymerization methods.

From a viewpoint of controlling the molecular weight of the organic compound obtained as a polymer, it is preferable to use an azo polymerization initiator or a persulfate as a polymerization initiator, more preferable to use an azobis polymerization initiator, and particularly preferable to use 2,2'-azobis(2,4-dimethyl-4-methoxy)valeronitrile. Note that a commercially available product such as V-70 produced by FUJIFILM Wako Pure Chemical Corporation, for example, can be used as the 2,2'-azobis(2,4-dimethyl-4-methoxy)valeronitrile.

The used amount of the polymerization initiator is preferably not less than 2 parts by mass and not more than 60 parts by mass relative to 100 parts by mass of all used monomers. When the used amount of the polymerization initiator is not less than the lower limit set forth above, the organic compound obtained as a polymer has excellent dispersibility. On the other hand, when the used amount of the polymerization initiator is not more than the upper limit set forth above, the average numbers of aromatic hydrocarbon monocycles and sulfur atom-containing functional groups per one molecule of the organic compound obtained as a polymer can be adjusted to within any of the ranges set forth above.

An organic compound that is produced as a polymer by the polymerization method (1) is considered to include structural units (monomer units) derived from the used monomers.

Note that in a case in which the organic compound is a polymer produced through copolymerization of a plurality of types of monomers, the mass proportion constituted by a structural unit (monomer unit) derived from a given monomer among the overall organic compound (polymer) is normally, unless otherwise specified, the same as the mass proportion (charging ratio) constituted by the given monomer among all monomers used in polymerization of that polymer.

### {(2) Addition condensation method}

In the addition condensation method (2), an aromatic compound including a sulfur atom-containing functional group that serves as a compound including both an aromatic hydrocarbon monocycle and a sulfur atom-containing functional group is subjected to addition condensation with an aldehyde to obtain an aldehyde condensate of the aromatic compound including a sulfur atom-containing functional group as an organic compound.

The aromatic compound including a sulfur atom-containing functional group is not specifically limited so long as it is a compound including an aromatic hydrocarbon monocycle and a sulfur atom-containing functional group such as described above. For example, an aromatic sulfonic acid such as benzene sulfonic acid, naphthalene sulfonic acid, an alkyl benzene sulfonic acid that includes an alkyl group, an alkyl naphthalene sulfonic acid that includes an alkyl group, or a naphthalene sulfonic acid that includes an ester group or an alkoxy group, or a salt of any of these aromatic sulfonic acids can be used. From a viewpoint of further improving dispersibility of a fibrous conductive material in a conductive material dispersion liquid, it is preferable to use naphthalene sulfonic acid, an alkyl naphthalene sulfonic acid that includes an alkyl group having a carbon number of not less than 1 and not more than 10, or a salt of either thereof, and more preferable to use naphthalene sulfonic acid or a salt thereof.

Moreover, formaldehyde (formalin), acetaldehyde, butyraldehyde, or the like can be used as the aldehyde without any specific limitations.

The addition condensation of the aromatic compound including a sulfur atom-containing functional group, such as naphthalene sulfonic acid, and the aldehyde can be performed by a commonly known method.

For example, by adding an aqueous solution of an aldehyde (for example, formalin, which is an aqueous solution of formaldehyde) dropwise to an aromatic compound including a sulfur atom-containing functional group (for example, naphthalene sulfonic acid) while performing heating, it is possible to obtain an aldehyde condensate of the aromatic compound including a sulfur atom-containing functional group (for example, a naphthalene sulfonic acid formalin condensate). Note that in a case in which an aromatic sulfonic acid such as naphthalene sulfonic acid, for example, is used as the aromatic compound including a sulfur atom-containing functional group, the obtained aldehyde condensate of the aromatic sulfonic acid can be used in that form as the organic compound, or a salt of the aldehyde condensate of the aromatic sulfonic acid (also referred to as an "aldehyde condensate of an aromatic sulfonic acid salt") that is obtained by neutralizing the obtained aldehyde condensate of the aromatic sulfonic acid through addition of an aqueous solution of a hydroxide of an alkali metal such as sodium hydroxide or potassium hydroxide, for example, can be used as the organic compound.

Note that the weight-average molecular weight, average number of aromatic hydrocarbon monocycles per one molecule, and average number of sulfur atom-containing functional groups per one molecule of the organic compound (aldehyde condensate) obtained by the addition condensation method (2) can be controlled through the types and additive amounts of the aromatic compound including a sulfur atom-containing functional group and the aldehyde that are used in addition condensation, the reaction conditions (for example, reaction temperature and reaction time), and so forth, for example.

### <Mass ratio of polymer and organic compound (polymer/organic compound)>

A mass ratio of the polymer and the organic compound (polymer/organic compound) in the binder composition is not specifically limited but is preferably 60/40 or more, more preferably 70/30 or more, and even more preferably 80/20 or more, and is preferably 999/1 or less, more preferably 499/1 or less, and even more preferably 99/1 or less. When the mass ratio of the polymer and the organic compound (polymer/organic compound) in the binder composition is not less than any of the lower limits set forth above, dispersibility of a fibrous conductive material in a conductive material dispersion liquid, stability of a slurry composition for a positive electrode, and low-temperature output characteristics and cycle characteristics of an electrochemical device can be further improved. On the other hand, when the mass ratio of the polymer and the organic compound (polymer/organic compound) in the binder composition is not more than any of the upper limits set forth above, dispersibility of a fibrous conductive material in a conductive material dispersion liquid, stability of a slurry composition for a positive electrode, and low-temperature output characteristics of an electrochemical device can be further improved.

Moreover, the mass ratio of the polymer and the organic compound (polymer/organic compound) in the binder composition maybe 90/10 or more, or may be 90/10 or less without any specific limitations.

### <Solvent>

The presently disclosed binder composition may optionally further contain a solvent.

No specific limitations are placed on the solvent. For example, an organic solvent can be used as the solvent. More specifically, examples of organic solvents that can be used with the specific polymer described above include alcohols such as methanol, ethanol, n-propanol, isopropanol, n-butanol, isobutanol, t-butanol, pentanol, hexanol, heptanol, octanol, nonanol, decanol, and amyl alcohol, ketones such as acetone, methyl ethyl ketone, and cyclohexanone, esters such as ethyl acetate and butyl acetate, ethers such as diethyl ether, dioxane, and tetrahydrofuran, amide polar organic solvents such as N,N-dimethylformamide and N-methyl-2-pyrrolidone (NMP), and aromatic hydrocarbons such as toluene, xylene, monochlorobenzene, orthodichlorobenzene, and paradichlorobenzene. One of these organic solvents may be used individually, or two or more of these organic solvents may be used as a mixture. Of these organic solvents, it is preferable to use N-methylpyrrolidone (NMP) from a viewpoint of further improving dispersibility of a fibrous conductive material in the binder composition.

### <Other components>

No specific limitations are placed on other components besides the above-described polymer, organic compound, and solvent that can be contained in the presently disclosed binder composition. Examples of other components includes binders other than the polymer described above, reinforcing materials, leveling agents, viscosity modifiers, and additives for electrolyte solution. These other components are not specifically limited so long as they do not affect battery reactions and may be selected from commonly known components such as those described in WO2012/115096A1, for example.

Note that one of these other components may be used individually, or two or more of these other components may be used in combination in a freely selected ratio.

### <Production method of binder composition>

No specific limitations are placed on the method by which the presently disclosed binder composition is produced.

For example, in a case in which a binder composition containing a solvent is to be produced as the presently disclosed binder composition, the binder composition can be obtained by mixing the above-described polymer, organic compound, solvent, and other optional components using a known mixing device such as a disper blade, for example.

Moreover, in a case in which a binder composition that does not contain a solvent is to be produced as the presently disclosed binder composition, a binder composition that does not contain a solvent can be obtained by kneading the above-described polymer, organic compound, and other optional components (for example, additives such as an antioxidant and, depending on the object, an inorganic filler may be added) using a mixer such as a Banbury mixer, an Intermixer, or a kneader.

The silicon content in a binder composition that does not contain a solvent (bale binder composition) is preferably adjusted as appropriate from a viewpoint of further improving dispersibility of a fibrous conductive material in a conductive material dispersion liquid that is produced using the binder composition. For example, the silicon content is preferably controlled such that when the binder composition that does not contain a solvent is dissolved in NMP to give a solid content concentration of 8 mass%, the Si concentration in the resultant NMP solution (liquid binder composition) is within a range of 1 mass ppm to 1,000 mass ppm.

Note that the Si concentration in an NMP solution (liquid binder composition) can be measured by ICP-MS.

Also note that in production of a conductive material dispersion liquid described below, the binder composition that does not contain a solvent may be used in that form or may be used after being dissolved or dispersed in a solvent to obtain a liquid binder composition (binder composition containing a solvent).

### (Conductive material dispersion liquid for electrochemical device positive electrode)

The presently disclosed conductive material dispersion liquid is a composition that contains a fibrous conductive material, a dispersion medium, and the binder composition set forth above. In other words, the presently disclosed conductive material dispersion liquid contains a fibrous conductive material, a dispersion medium, the specific polymer described above, and the specific organic compound described above, and optionally contains a conductive material other than a fibrous conductive material (i.e., another conductive material) and/or other components.

The presently disclosed conductive material dispersion liquid has excellent dispersibility of the fibrous conductive material as a result of containing the presently disclosed binder composition that contains at least the specific polymer and the specific organic compound. Moreover, as a result of the presently disclosed conductive material dispersion liquid containing a fibrous conductive material, a dispersion medium, the specific polymer, and the specific organic compound and having excellent dispersibility of the conductive material, it is possible to produce a slurry composition for a positive electrode having excellent stability by using this conductive material dispersion liquid, and it is possible to produce a positive electrode that can cause an electrochemical device to display excellent low-temperature characteristics and cycle characteristics by using the produced slurry composition for a positive electrode.

Note that the presently disclosed conductive material dispersion liquid is an intermediate product for producing the presently disclosed slurry composition for a positive electrode described further below and does not normally contain an electrode active material such as a positive electrode active material. Also note that the polymer and the organic compound that are contained in the presently disclosed conductive material dispersion liquid originate from the presently disclosed binder composition and that the preferred ratio thereof is the same as in the presently disclosed binder composition.

### <Fibrous conductive material>

The fibrous conductive material may be a fibrous carbon material such as carbon nanotubes (single-walled CNTs or multi-walled CNTs), carbon nanohorns, carbon nanofiber, or milled carbon fiber, for example. Note that one fibrous conductive material may be used individually, or two or more fibrous conductive materials may be used in combination in a freely selected ratio. Of these fibrous conductive materials, carbon nanotubes and carbon nanofiber are preferable from a viewpoint of further improving low-temperature output characteristics and cycle characteristics of an electrochemical device, and carbon nanotubes are more preferable.

Moreover, the fibrous conductive material is preferably of a bundle type. By using a bundle-type fibrous conductive material, it is possible to further improve dispersibility of the fibrous conductive material in the conductive material dispersion liquid while also further improving low-temperature output characteristics and cycle characteristics of an electrochemical device.

### «D/G ratio»

In a case in which a fibrous carbon material is used as the fibrous conductive material, the D/G ratio of the fibrous carbon material is preferably 2.0 or less, more preferably 1.8 or less, even more preferably 1.5 or less, and further preferably 1.1 or less from a viewpoint of further improving dispersibility of the fibrous conductive material in the conductive material dispersion liquid, stability of a slurry composition for a positive electrode, and low-temperature output characteristics and cycle characteristics of an electrochemical device.

The D/G ratio is an indicator that is typically used to evaluate the quality of a carbon material. In a Raman spectrum of a carbon material measured by a Raman spectrometer, vibration modes referred to as a G band (near 1600 cm⁻¹) and a D band (near 1350 cm⁻¹) are observed. The G band is a vibration mode based on hexagonal lattice structure of graphite and the D band is a vibration mode based on amorphous locations. Therefore, a carbon material having a smaller value for a peak intensity ratio of the D band and the G band (D/G ratio) can be said to have fewer amorphous locations (i.e., defect structures). Studies conducted by the inventors have revealed that by using a fibrous carbon material having few defect structures, dispersibility of a fibrous conductive material in a conductive material dispersion liquid further improves through lowering of an initial dispersion TI value, etc., and that as a result of improvement of dispersibility of the fibrous conductive material in the conductive material dispersion liquid, stability of a slurry composition for a positive electrode further improves, and low-temperature output characteristics and cycle characteristics of an electrochemical device further improve.

Although it is not clear why dispersibility of the conductive material dispersion liquid improves through use of a fibrous carbon material having few defect structures, the reason for this is presumed to be that a fibrous carbon material having few defect structures makes it possible for an effect of a steric protective layer through the previously described organic compound to be obtained well and enables even better adsorption of the polymer to the fibrous carbon material via the organic compound.

Note that the lower limit for the D/G ratio of the fibrous carbon material is not specifically limited and may be 0.1 or more, for example. Moreover, the D/G ratio of the fibrous carbon material can be controlled by altering conditions in production of the fibrous carbon material, for example.

### «BET specific surface area»

The BET specific surface area of the fibrous conductive material is preferably 100 m²/g or more, more preferably 150 m²/g or more, and even more preferably 200 m²/g or more, and is preferably 1,000 m²/g or less, more preferably 500 m²/g or less, and even more preferably 400 m²/g or less. When the BET specific surface area is within any of the ranges set forth above, dispersibility of the fibrous conductive material in the conductive material dispersion liquid and stability of a slurry composition for a positive electrode can be further improved while also further improving low-temperature output characteristics and cycle characteristics of an electrochemical device.

Moreover, the BET specific surface area of the fibrous conductive material may be 300 m²/g or more, or may be 300 m²/g or less.

Note that the "BET specific surface area" of the fibrous conductive material referred to in the present disclosure can be measured by a method described in the EXAMPLES section of the present specification.

### <<Surface acid content>>

The surface acid content of the fibrous conductive material is preferably 0.01 mmol/g or more, and is preferably 0.20 mmol/g or less, more preferably 0.15 mmol/g or less, and even more preferably 0.08 mmol/g or less. When the surface acid content of the fibrous conductive material is not less than the lower limit set forth above, stability of a slurry composition for a positive electrode can be further improved. On the other hand, when the surface acid content of the fibrous conductive material is not more than any of the upper limits set forth above, dispersibility of the fibrous conductive material in the conductive material dispersion liquid and stability of a slurry composition for a positive electrode can be further improved, and low-temperature output characteristics and cycle characteristics of an electrochemical device can also be further improved.

Moreover, the surface acid content of the fibrous conductive material may be 0.02 mmol/g or more, or may be 0.02 mmol/g or less.

### <<Surface acid content/surface base content»

A ratio of surface acid content relative to surface base content (surface acid content/surface base content) of the fibrous conductive material is preferably 0.10 or more, more preferably 0.15 or more, and even more preferably 0.20 or more, and is preferably 2.5 or less, more preferably 2.0 or less, and even more preferably 1.2 or less. When the ratio of surface acid content relative to surface base content (surface acid content/surface base content) of the fibrous conductive material is not less than any of the lower limits set forth above, stability of a slurry composition for a positive electrode can be further improved. On the other hand, when the ratio of surface acid content relative to surface base content (surface acid content/surface base content) of the fibrous conductive material is not more than any of the upper limits set forth above, dispersibility of the fibrous conductive material in the conductive material dispersion liquid and stability of a slurry composition for a positive electrode can be further improved, and low-temperature output characteristics and cycle characteristics of an electrochemical device can also be further improved.

Note that the ratio of surface acid content relative to surface base content (surface acid content/surface base content) of the fibrous conductive material may be 0.30 or more, or may be 0.30 or less.

### <<Production method>>

No specific limitations are placed on the method by which the fibrous conductive material is produced. The following gives CNTs for which surface acid content and a value of surface acid content/surface base content are within any of the preferred ranges set forth above as an example and describes the production method thereof.

The CNTs for which surface acid content and a value of surface acid content/surface base content are within any of the preferred ranges set forth above can be produced through a step of performing acid treatment of feedstock CNTs (acid treatment step), a step of performing base treatment of the feedstock CNTs that have undergone acid treatment (base treatment step), and a step of washing the feedstock CNTs that have undergone base treatment (washing step).

### [Acid treatment step]

In the acid treatment step, feedstock CNTs are subjected to acid treatment. The feedstock CNTs can be selected as appropriate from known CNTs in accordance with the desired surface-treated CNT properties (number of walls, D/G ratio, BET specific surface area, etc.) without any specific limitations.

Although no specific limitations are placed on the method of acid treatment so long as an acid can be brought into contact with the feedstock CNTs, a method in which the feedstock CNTs are immersed in an acid treatment solution (aqueous solution of an acid) is preferable.

The acid that is contained in the acid treatment solution may be nitric acid, sulfuric acid, or hydrochloric acid, for example, without any specific limitations. One of these acids may be used individually, or two or more of these acids may be used in combination. Of these acids, nitric acid and sulfuric acid are preferable.

The time for which the feedstock CNTs are immersed in the acid treatment solution (immersion time) is preferably 1 minute or more, more preferably 10 minutes or more, even more preferably 30 minutes or more, and particularly preferably 50 minutes or more, and is preferably 120 minutes or less, more preferably 100 minutes or less, and even more preferably 80 minutes or less. The surface acid content of the surface-treated CNTs can be increased when the immersion time is 1 minute or more, whereas the surface acid content of the surface-treated CNTs does not excessively increase and production efficiency of the surface-treated CNTs is sufficiently ensured when the immersion time is 120 minutes or less.

The temperature when the feedstock CNTs are immersed in the acid treatment solution (immersion temperature) is preferably 20°C or higher, and more preferably 40°C or higher, and is preferably 80°C or lower, and more preferably 70°C or lower. When the immersion temperature is within any of the ranges set forth above, the surface acid content of the obtained surface-treated CNTs can be increased to a suitable degree.

After this immersion, the CNTs that have undergone the acid treatment step (acid-treated CNTs) can be collected from a mixture of the acid-treated CNTs and the acid treatment solution by a known technique such as filtration. The acid-treated CNTs that are collected may then be washed with water as necessary.

### [Base treatment step]

In the base treatment step, the acid-treated CNTs that have been obtained through the acid treatment step described above are subjected to base treatment.

Although no specific limitations are placed on the method of base treatment so long as a base can be brought into contact with the acid-treated CNTs, a method in which the acid-treated CNTs are immersed in a base treatment solution (aqueous solution of a base) is preferable.

The base contained in the base treatment solution may be lithium hydroxide, ammonium chloride, sodium bicarbonate, or sodium hydroxide, for example, without any specific limitations. One of these bases may be used individually, or two or more of these bases may be used in combination. Of these bases, lithium hydroxide and ammonium chloride are preferable, and lithium hydroxide is more preferable.

The time for which the acid-treated CNTs are immersed in the base treatment solution (immersion time) is preferably 10 minutes or more, more preferably 60 minutes or more, even more preferably 80 minutes or more, and particularly preferably 90 minutes or more, and is preferably 240 minutes or less, more preferably 200 minutes or less, and even more preferably 150 minutes or less. The surface base content of the surface-treated CNTs can be increased when the immersion time is 10 minutes or more, whereas the surface base content of the surface-treated CNTs does not excessively increase and production efficiency of the surface-treated CNTs is sufficiently ensured when the immersion time is 240 minutes or less.

The temperature when the acid-treated CNTs are immersed in the base treatment solution (immersion temperature) is preferably 10°C or higher, and more preferably 20°C or higher, and is preferably 40°C or lower, and more preferably 27°C or lower. When the immersion temperature is within any of the ranges set forth above, the surface base content of the obtained surface-treated CNTs can be increased to a suitable degree.

### [Washing step]

In the washing step, the feedstock CNTs that have been obtained through the acid treatment step and base treatment step described above (i.e., acid/base-treated CNTs) are washed. This washing can remove excess acid components and base components (particularly base components) attached to the surface of the acid/base-treated CNTs and makes it possible to obtain surface-treated CNTs having specific properties.

Although no specific limitations are placed on the method by which the acid/base-treated CNTs are washed, water washing is preferable. For example, the acid/base-treated CNTs may be collected from a mixture of the acid/base-treated CNTs and the base treatment solution by a known technique such as filtration and these acid/base-treated CNTs may be washed with water. In this washing, it is possible to estimate to what extent acid components and base components have been removed by measuring the electrical conductivity of water (washing water) that has been used to wash the acid/base-treated CNTs.

After the washing step described above, removal of surface-attached water by drying and the like may be performed as necessary to obtain the surface-treated CNTs.

Note that the surface acid content and the surface base content of the surface-treated CNTs can be adjusted by altering conditions of the acid treatment step, base treatment step, and washing step described above. For example, the surface acid content and the surface base content of the surface-treated CNTs can be adjusted by altering the types and concentrations of the acid and the base contained in the acid treatment solution and the base treatment solution that are used in the acid treatment step and the base treatment step, respectively. Moreover, the surface acid content of the surface-treated CNTs can be increased by increasing the immersion time in the acid treatment step, and the surface base content of the surface-treated CNTs can be increased by increasing the immersion time in the base treatment step. Also, the surface acid content and the surface base content (particularly the surface base content) can be adjusted by altering the extent to which washing is performed in the washing step.

### <Dispersion medium>

Any of the various organic solvents given as examples of solvents that can be used in the presently disclosed binder composition can be used as the dispersion medium. The amount of the dispersion medium can be set such that the solid content concentration of the conductive material dispersion liquid is 1 mass% or more, preferably 2 mass% or more, and more preferably 3 mass% or more, for example, and is 60 mass% or less, preferably 50 mass% or less, and more preferably 40 mass% or less, for example.

### <Binder composition>

The presently disclosed binder composition that contains the specific polymer described above and the specific organic compound described above and that optionally contains a solvent and other components is used as a binder composition.

No specific limitations are placed on the quantitative ratio of the fibrous conductive material and the binder composition in production of the conductive material dispersion liquid. For example, the fibrous conductive material and the binder composition may be mixed in a quantitative ratio such that the obtained conductive material dispersion liquid preferably contains 5 parts by mass or more, and more preferably 10 parts by mass or more, in terms of solid content, of the binder composition per 100 parts by mass of the fibrous conductive material, and preferably contains 40 parts by mass or less, and more preferably 30 parts by mass or less, in terms of solid content, of the binder composition per 100 parts by mass of the fibrous conductive material.

### <Other conductive material>

Any conductive material having a form other than a fibrous form (for example, a particulate or plate-like form), such as carbon black (for example, acetylene black, Ketjenblack^{®} (Ketjenblack is a registered trademark in Japan, other countries, or both), or furnace black) or graphene, may be used as another conductive material without any specific limitations. Note that one other conductive material may be used individually, or two or more other conductive materials may be used in combination in a freely selected ratio.

Although no specific limitations are placed on the quantitative ratio of the fibrous conductive material and the other conductive material that is optionally used in production of the conductive material dispersion liquid, the proportion constituted by the mass of the fibrous conductive material among the total mass of the fibrous conductive material and the other conductive material is preferably not less than 50 mass% and not more than 100 mass% from a viewpoint of sufficiently ensuring dispersibility of the conductive material dispersion liquid. Moreover, it may of course be the case that the presently disclosed conductive material dispersion liquid does not contain another conductive material.

### <Other components>

Examples of other components that can be compounded in the conductive material dispersion liquid include, but are not specifically limited to, the same components as other components that can be compounded in the presently disclosed binder composition. One other component may be used individually, or two or more other components may be used in combination in a freely selected ratio.

### <Production method of conductive material dispersion liquid>

No specific limitations are placed on the method by which the conductive material dispersion liquid is produced. The conductive material dispersion liquid can be produced by mixing the fibrous conductive material, the dispersion medium, and the presently disclosed binder composition using a known mixing device, for example.

Note that an organic solvent such as NMP may be further added as a dispersion medium to the fibrous conductive material and the binder composition in production of the conductive material dispersion liquid, or a solvent that is optionally contained in the binder composition may be used in that form as a dispersion medium in production of the conductive material dispersion liquid.

Also note that another conductive material and/or other components may also be mixed in addition to the fibrous conductive material, the dispersion medium, and the binder composition in production of the conductive material dispersion liquid.

### (Slurry composition for electrochemical device positive electrode)

The presently disclosed slurry composition for a positive electrode is a composition that contains an electrode active material and the conductive material dispersion liquid set forth above. In other words, the presently disclosed slurry composition for a positive electrode contains at least an electrode active material, the fibrous conductive material described above, the dispersion medium described above, the specific polymer described above, and the specific organic compound described above. Note that the presently disclosed slurry composition for a positive electrode may further contain a binder other than the specific polymer described above (i.e., another binder).

The presently disclosed slurry composition for a positive electrode has excellent stability as a result of containing the presently disclosed conductive material dispersion liquid. Moreover, through a positive electrode that is formed using the presently disclosed slurry composition for a positive electrode, it is possible to improve low-temperature output characteristics of an electrochemical device. Furthermore, through a positive electrode that is formed using the presently disclosed slurry composition for a positive electrode, it is possible to improve cycle characteristics of an electrochemical device.

Note that the fibrous conductive material, specific polymer, and specific organic compound that are contained in the presently disclosed slurry composition for a positive electrode originate from the presently disclosed binder composition and conductive material dispersion liquid and that the preferred ratio thereof is the same as in the presently disclosed binder composition and conductive material dispersion liquid.

### <Positive electrode active material>

The positive electrode active material is a material that gives and receives electrons in a positive electrode of an electrochemical device. In the case of a positive electrode active material for a lithium ion secondary battery, the positive electrode active material is normally a material that can occlude and release lithium.

Although the following describes the positive electrode active material using a case in which the electrochemical device is a lithium ion secondary battery as one example, the present disclosure is not limited to the following example.

Any known positive electrode active material can be used without any specific limitations as the positive electrode active material that is compounded in the slurry composition for a positive electrode.

Specifically, the positive electrode active material for a lithium ion secondary battery may be a compound that includes a transition metal such as a transition metal oxide, a transition metal sulfide, or a complex metal oxide of lithium and a transition metal, for example. Examples of the transition metal include Ti, V, Cr, Mn, Fe, Co, Ni, Cu, and Mo.

Examples of the transition metal oxide include MnO, MnO₂, V₂O₅, V₆O₁₃, TiO₂, Cu₂V₂O₃, amorphous V₂O-P₂O₅, amorphous MoO₃, amorphous V₂O₅, and amorphous V₆O₁₃.

Examples of the transition metal sulfide include TiS₂, TiS₃, amorphous MoS₂, and FeS.

Examples of the complex metal oxide of lithium and a transition metal include a lithium-containing complex metal oxide having a layered structure, a lithium-containing complex metal oxide having a spinel structure, and a lithium-containing complex metal oxide having an olivine structure.

The lithium-containing complex metal oxide having a layered structure may be lithium-containing cobalt oxide (LiCoO₂ (lithium cobalt oxide)), lithium-containing nickel oxide (LiNiO₂), a lithium-containing complex oxide of Co-Ni-Mn (Li(Co Mn Ni)O₂), a lithium-containing complex oxide of Ni-Mn-Al, a lithium-containing complex oxide of Ni-Co-Al, a solid solution of LiMaO₂ and Li₂MbO₃, or the like, for example. Note that the lithium-containing complex oxide of Co-Ni-Mn may be Li[Ni_{0.5}Co_{0.2}Mn_{0.3}]O₂, LiNi_{0.5}Co_{0.2}Mn_{0.3}]O₂, Li[Ni_{1/3}Co_{1/3}Mn_{1/3}]O₂, LiNi_{0.6}Co_{0.2}Mn_{0.2}O₂, or the like. The solid solution of LiMaO₂ and Li₂MbO₃ may be xLiMaO₂·(1-x)Li₂MbO₃ or the like, for example, where x is a number satisfying 0 < x < 1, Ma represents one or more transition metals having an average oxidation state of 3+, and Mb represents one or more transition metals having an average oxidation state of 4+. Examples of solid solutions such as described above include Li[Ni_{0.17}Li_{0.2}CO_{0.07}Mn_{0.56}]O₂.

The term "average oxidation state" as used in the present specification refers to an average oxidation state of the "one or more transition metals" and is calculated from the molar quantities and the valences of the transition metals. For example, in a case in which the "one or more transition metals" are composed of 50 mol% of Ni²⁺ and 50 mol% of Mn⁴⁺, the average oxidation state of the "one or more transition metals" is (0.5) × (2+) + (0.5) × (4+) = 3+.

The lithium-containing complex metal oxide having a spinel structure may be lithium manganate (LiMn₂O₄) or a compound in which some of the Mn in lithium manganate (LiMn₂O₄) has been substituted for another transition metal, for example. One specific example thereof is Liₛ[Mn₂₋ₜMcₜ]O₄, such as LiNi_{0.5}Mn_{1.5}O₄, where Mc represents one or more transition metals having an average oxidation state of 4+, specific examples of which include Ni, Co, Fe, Cu, and Cr, t is a number satisfying 0 < t < 1, and s is a number satisfying 0 ≤ s ≤ 1. Note that a lithium-rich spinel compound represented by Li₁₊ₓMn₂₋ₓO₄ (0 < x < 2) or the like can also be used as the positive electrode active material.

The lithium-containing complex metal oxide having an olivine structure may be an olivine-type lithium phosphate compound represented by Li_{y}MdPO₄, such as olivine-type lithium iron phosphate (LiFePO₄) or olivine-type lithium manganese phosphate (LiMnPO₄), where Md represents one or more transition metals having an average oxidation state of 3+, examples of which include Mn, Fe, and Co, and y represents a number satisfying 0 ≤ y ≤ 2. Moreover, in the olivine-type lithium phosphate compound represented by the formula Li_{y}MdPO₄, some of Md may be substituted for another metal. Examples of possible substituting metals include Cu, Mg, Zn, V, Ca, Sr, Ba, Ti, Al, Si, B, and Mo.

Of the examples described above, lithium-containing cobalt oxide (LiCoO₂), a lithium-containing complex oxide of Co-Ni-Mn (Li(Co Mn Ni)O₂), a solid solution of LiMaO₂ and Li₂MbO₃, Li[Ni_{0.5}Co_{0.2}Mn_{0.3}]O₂, Li[Ni_{1/3}Co_{1/3}Mn_{1/3}]O₂, LiNi_{0.5}Mn_{1.5}O₄, LiNi_{0.6}Co_{0.2}Mn_{0.2}O₂, or the like is preferable as the positive electrode active material from a viewpoint of enabling higher potential in a lithium ion secondary battery.

One positive electrode active material may be used individually, or two or more positive electrode active materials may be used in combination in a freely selected ratio.

The particle diameter of the positive electrode active material is not specifically limited and may be the same as that of a conventionally used positive electrode active material.

Moreover, the amount of the positive electrode active material in the slurry composition for a positive electrode is not specifically limited and may be set within a conventionally used range.

### <Conductive material dispersion liquid>

The presently disclosed conductive material dispersion liquid that contains at least the fibrous conductive material described above, the specific polymer described above, a dispersion medium, and the specific organic compound described above is used as a conductive material dispersion liquid.

### <Other binder>

The presently disclosed slurry composition for a positive electrode preferably further contains another binder from a viewpoint of improving peel strength of a positive electrode.

The other binder is not specifically limited so long as it is a binder other than the specific polymer and the specific organic compound described above, but is preferably a fluoropolymer. The fluoropolymer may be polyvinylidene fluoride (PVdF) or polyvinylidene fluoride-hexafluoropropylene (PVdF-HFP) copolymer, for example. One fluoropolymer may be used individually, or two or more fluoropolymers may be used in combination in a freely selected ratio. Of these fluoropolymers, polyvinylidene fluoride is preferable from a viewpoint of further increasing peel strength of a positive electrode while also even further suppressing an increase of internal resistance after cycling of an electrochemical device.

Note that from a viewpoint of increasing peel strength of a positive electrode while also suppressing an increase of internal resistance after cycling of an electrochemical device, the content of the other binder in the slurry composition for a positive electrode is preferably 0.1 parts by mass or more, and more preferably 0.5 parts by mass or more per 100 parts by mass of the positive electrode active material, and is preferably 3 parts by mass or less, and more preferably 2 parts by mass or less per 100 parts by mass of the positive electrode active material.

### <Production method of slurry composition for positive electrode>

No specific limitations are placed on the method by which the slurry composition for a positive electrode is produced. The slurry composition for a positive electrode can be produced by mixing the positive electrode active material, the conductive material dispersion liquid, and optional components such as the other binder using a known mixing device, for example. In the case of a slurry composition for a positive electrode that is obtained by mixing a positive electrode active material with the presently disclosed conductive material dispersion liquid that contains the specific polymer and the specific organic compound described above and has good dispersion of a fibrous conductive material, this slurry composition for a positive electrode is homogeneous, has excellent stability, and is capable of forming a positive electrode that can cause an electrochemical device to display excellent low-temperature output characteristics and cycle characteristics.

Note that an organic solvent such as NMP that was previously described as a dispersion medium that can be contained in the conductive material dispersion liquid may be further added in production of the slurry composition for a positive electrode. The additive amount of the organic solvent as a dispersion medium can be adjusted as appropriate such that the obtained slurry composition for a positive electrode has a desired viscosity.

The viscosity of the produced slurry composition for a positive electrode (measured by single-cylinder rotational viscometer in accordance with JIS Z8803: 1991; temperature: 25°C; rotation speed: 60 rpm) is preferably within a range of 4,000 mPa·s to 5,000 mPa·s, for example.

### (Positive electrode for electrochemical device)

The presently disclosed positive electrode includes a positive electrode mixed material layer obtained using the presently disclosed slurry composition for a positive electrode set forth above. More specifically, the presently disclosed positive electrode normally includes the aforementioned positive electrode mixed material layer on a current collector. The presently disclosed positive electrode can cause an electrochemical device to display excellent low-temperature output characteristics as a result of the positive electrode mixed material layer being formed from the presently disclosed slurry composition for a positive electrode set forth above. The presently disclosed positive electrode can also cause an electrochemical device to display excellent cycle characteristics. The positive electrode mixed material layer is normally formed of a dried product of the presently disclosed slurry composition for a positive electrode set forth above. Moreover, the positive electrode mixed material layer contains at least a positive electrode active material, a fibrous conductive material, the specific polymer, and the specific organic compound. It should be noted that components contained in the positive electrode mixed material layer are components that were contained in the presently disclosed slurry composition for a positive electrode and that the preferred ratio of these components is the same as the preferred ratio of the components in the presently disclosed slurry composition for a positive electrode.

### <Current collector>

The current collector is formed of a material having electrical conductivity and electrochemical durability. Any known current collector can be used as the current collector without any specific limitations. For example, a current collector that is formed of aluminum or an aluminum alloy can be used as a current collector included in a positive electrode of a lithium ion secondary battery. Moreover, aluminum and an aluminum alloy may be used in combination, or different types of aluminum alloys may be used in combination. Aluminum and aluminum alloys make excellent current collector materials due to having heat resistance and electrochemical stability.

### <Production method of positive electrode>

No specific limitations are placed on the method by which the presently disclosed positive electrode is produced. For example, the presently disclosed positive electrode can be produced by applying the presently disclosed slurry composition for a positive electrode set forth above onto at least one side of the current collector and drying the slurry composition for a positive electrode to form a positive electrode mixed material layer. In more detail, this production method includes a step of applying the slurry composition for a positive electrode onto at least one side of the current collector (application step) and a step of drying the slurry composition for a positive electrode that has been applied onto at least one side of the current collector so as to form a positive electrode mixed material layer on the current collector (drying step).

### «Application step»

The slurry composition for a positive electrode can be applied onto the current collector by any commonly known method without any specific limitations. Specific examples of application methods that can be used include doctor blading, dip coating, reverse roll coating, direct roll coating, gravure coating, extrusion coating, and brush coating. In the application, the slurry composition for a positive electrode may be applied onto just one side of the current collector, or may be applied onto both sides of the current collector. The thickness of a coating film of the slurry composition for a positive electrode on the current collector after application but before drying can be set as appropriate in accordance with the thickness of the positive electrode mixed material layer to be obtained after drying.

### <<Drying step>>

The slurry composition for a positive electrode on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition for a positive electrode on the current collector in this manner, a positive electrode mixed material layer can be formed on the current collector to thereby obtain a positive electrode that includes the current collector and the positive electrode mixed material layer.

After the drying step, the positive electrode mixed material layer may be further subjected to a pressing process such as mold pressing or roll pressing. This pressing process enables good close adherence of the positive electrode mixed material layer to the current collector.

Furthermore, in a case in which the positive electrode mixed material layer contains a curable polymer, this polymer may be cured after formation of the positive electrode mixed material layer.

### (Electrochemical device)

The presently disclosed electrochemical device includes the presently disclosed positive electrode set forth above. Moreover, the presently disclosed electrochemical device has excellent low-temperature output characteristics as a result of including the presently disclosed positive electrode. Furthermore, the presently disclosed electrochemical device also has excellent cycle characteristics as a result of including the presently disclosed positive electrode. Note that the presently disclosed electrochemical device may be a non-aqueous secondary battery, for example, and is preferably a lithium ion secondary battery.

The following describes the configuration of a lithium ion secondary battery as one example of the presently disclosed electrochemical device. This lithium ion secondary battery includes a positive electrode, a negative electrode, an electrolyte solution, and a separator. The presently disclosed positive electrode is used as the positive electrode.

### <Negative electrode>

Any known negative electrode can be used without any specific limitations as the negative electrode.

### <Electrolyte solution>

The electrolyte solution is normally an organic electrolyte solution obtained by dissolving a supporting electrolyte in an organic solvent. The supporting electrolyte may, for example, be a lithium salt. Examples of lithium salts that can be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable because they readily dissolve in solvents and exhibit a high degree of dissociation, with LiPF₆ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of suitable organic solvents include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

The concentration of the electrolyte in the electrolyte solution can be adjusted as appropriate and is, for example, preferably 0.5 mass% to 15 mass%, more preferably 2 mass% to 13 mass%, and even more preferably 5 mass% to 10 mass%. Moreover, a known additive such as fluoroethylene carbonate or ethyl methyl sulfone may be added to the electrolyte solution.

### <Separator>

Examples of separators that can be used include, but are not specifically limited to, those described in JP2012-204303A. Of these separators, a microporous membrane formed of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the volumetric capacity.

### <Production method of lithium ion secondary battery>

The lithium ion secondary battery in accordance with the present disclosure can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%", "ppm", and "parts" used to express quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. Furthermore, in the case of a polymer that is a hydrogenated polymer obtained through hydrogenation of a polymerized product including aliphatic conjugated diene monomer units, the total proportional content of non-hydrogenated aliphatic conjugated diene monomer units and alkylene structural units that are hydrogenated aliphatic conjugated diene monomer units in the hydrogenated polymer is the same as the ratio (charging ratio) of an aliphatic conjugated diene monomer among all monomers used in polymerization of the polymerized product.

In the examples and comparative examples, various measurements and evaluations were performed by the following methods.

### <Weight-average molecular weight of polymer>

The weight-average molecular weight (Mw) of a polymer was measured by gel permeation chromatography (GPC) under the following conditions using a LiBr-DMF solution of 10 mM in concentration.
- Separation column: Shodex KD-806M (produced by Showa Denko K.K.)
- Detector: Differential refractometer detector RID-10A (produced by Shimadzu Corporation)
- Eluent flow rate: 0.3 mL/min
- Column temperature: 40°C
- Standard polymer: TSK Standard Polystyrene (produced by Tosoh Corporation)

### <Sulfur content of polymer>

An NMP solution of a polymer obtained in each example or comparative example was distilled under reduced pressure to remove solvent and obtain a sample. Approximately 0.02 g of the sample was weighed out onto a magnetic board, the sample was combusted using an automatic combustion device (produced by Yanaco), and then the sulfur content was quantified by ion chromatography (930 Compact IC Flex produced by Metrohm). Note that each sulfur content was quantified as the amount of sulfur (µg) contained per 1 g of mass of the polymer (i.e., an amount (ppm) based on mass of the polymer).

### <Iodine value of polymer>

After coagulating 100 g of a water dispersion (or monochlorobenzene solution) of a polymer produced in each example or comparative example in 1 L of methanol, 12 hours of vacuum drying was performed at a temperature of 60°C. The iodine value of the resultant dry polymer was measured in accordance with JIS K6235(2006).

### <Average number of aromatic hydrocarbon monocycles per one molecule of organic compound>

The average number of aromatic hydrocarbon monocycles per one molecule of an organic compound was determined by ¹H-NMR measurement. Specifically, 30 mg of the organic compound was dissolved in 1 mL of a measurement solvent (CDCl₃), measurement thereof was performed by ¹H-NMR, and the average number of aromatic hydrocarbon monocycles per one molecule of the organic compound was determined from peak area intensity attributed to protons of aromatic hydrocarbon origin.

### <Average number of functional groups including sulfur atom per one molecule of organic compound>

The average number of sulfur atom-containing functional groups (sulfur atom-containing functional groups) per one molecule of an organic compound was determined by ¹³C-NMR measurement. Specifically, 30 mg of the organic compound was dissolved in 1 mL of a measurement solvent (CDCl₃), measurement thereof was performed by ¹³C-NMR, and the average number of sulfur-containing functional groups per one molecule of the organic compound was determined from peak area intensity attributed to sulfur atoms.

### <Weight-average molecular weight of organic compound>

The weight-average molecular weight of an organic compound was measured by gel permeation chromatography (GPC). First, the organic compound was added to approximately 5 mL of an eluent such as to give a solid content concentration of approximately 0.5 g/L and was gradually dissolved at room temperature. Once dissolution of the organic compound was visually confirmed, the solution was gently filtered using a 0.45 µm filter to prepare a measurement sample. The measurement sample was used to perform GPC measurement. The weight-average molecular weight of the organic compound was calculated as a standard substance-equivalent value based on a calibration curve prepared using GPC measurement results for a standard substance.

Note that the GPC measurement conditions were as follows.

### <<Measurement conditions>>

Column: Three columns (Shodex OHpak SB-G, SB-807HQ, and SB-806MHQ produced by Showa Denko K.K.) connected in series
Eluent: 0.1 M Tris buffer solution (0.1 M potassium chloride added)
Flow rate: 0.5 mL/min
Concentration of measurement sample of organic compound: 0.5 g/L (solid content concentration)
Injection volume: 200 µL
Column temperature: 40°C
Detector: Differential refractive index detector RI (produced by Tosoh Corporation; product name: RI-8020)
Standard substance: Monodisperse pullulan (produced by Showa Denko K.K.)

### <Surface acid content>

Approximately 1 g of measurement subject CNTs were precisely weighed, were then immersed in 100 mL of 0.01 mol dm⁻³ tetrabutylhydride (TBA OH)/4-methyl-2-pentanone (MIBK) solution, and were stirred by a stirrer for 1 hour. Thereafter, centrifugal separation was performed, and the supernatant was filtered using a filter. Residual TBA OH in 50 mL of the resultant filtrate was quantitatively analyzed by performing non-aqueous coulometric titration with 0.01 mol dm⁻³ perchloric acid (HClO₄)/MIBK solution, and then the acid content (mmol/g) per 1 g of CNTs was determined from the obtained value. Note that this analysis was performed using an automatic coulometric titrator (produced by Kyoto Electronics Manufacturing Co., Ltd.; product name: AT-700). Also note that this sequence of operations was performed under argon gas flow at room temperature.

### <Surface base content>

Approximately 1 g of measurement subject CNTs were precisely weighed, were then immersed in 100 mL of 0.01 mol dm⁻³ HClO₄/MIBK solution, and were stirred by a stirrer for 1 hour. Thereafter, centrifugal separation was performed, and the supernatant was filtered using a filter. Residual HClO₄ in 50 mL of the resultant filtrate was quantitatively analyzed by performing non-aqueous coulometric titration with 0.01 mol dm⁻³ TBA OH/MIBK solution, and then the base content (mmol/g) per 1 g of CNTs was determined from the obtained value. Note that this analysis was performed using an automatic coulometric titrator (produced by Kyoto Electronics Manufacturing Co., Ltd.; product name: AT-700). Also note that this sequence of operations was performed under argon gas flow at room temperature.

### <BET specific surface area>

The BET specific surface area of CNTs was measured using a Belsorpmini (produced by MicrotracBEL Corp.; conforming with ASTM D3037-81).

### <D/G ratio>

The D/G ratio of CNTs was measured at an excitation wavelength of 532 nm by Raman spectroscopy (Laser Raman Microscope SENTERRA produced by Bruker Optics Inc.) with the sample fixed under glass.

### <Initial dispersion viscosity (dispersibility)>

The initial dispersion viscosity η_{A} of a conductive material dispersion liquid under conditions of a temperature of 25°C and a shear rate of 10 s⁻¹ was measured using a rheometer (MCR 302 produced by Anton Paar) and was evaluated by the following standard. A smaller value for η_{A} indicates better dispersion of CNTs, etc. in the conductive material dispersion liquid.
A: η_{A} of 5 Pa·s or less
B: η_{A} of more than 5 Pa·s and not more than 15 Pa·s
C: η_{A} of more than 15 Pa·s and not more than 50 Pa·s
D: η_{A} of more than 50 Pa·s or not measurable

### <Initial dispersion TI value (dispersibility)>

The shear rate dependency of viscosity was evaluated for a conductive material dispersion liquid in a shear rate range of from 10⁻² to 10³ in units of 1/s using a rheometer (MCR 302 produced by Anton Paar) under a condition of a temperature of 25°C. The viscosity η₁₀ at a shear rate of 10 s⁻¹ and the viscosity η_{0.1} at a shear rate of 0.1 s⁻¹ were used to calculate a TI value (= η_{0.1}/η₁₀), and this TI value was evaluated by the following standard. A lower TI value indicates better dispersion of CNTs, etc. in the conductive material dispersion liquid.
A: TI value of less than 30
B: TI value of not less than 30 and less than 50
C: TI value of not less than 50 and less than 70
D: TI value of 70 or more

### <Viscosity of positive electrode slurry composition>

A positive electrode active material, a conductive material, and a binder composition for a positive electrode were mixed, and N-methylpyrrolidone (NMP) was added and further mixed to obtain a slurry composition for a positive electrode through the same operations as in "Production of slurry composition for positive electrode" described further below with the exception that the additive amount of solvent was adjusted such that the solid content concentration of the slurry composition for a positive electrode obtained in each example or comparative example was 70 mass%. The viscosity of the obtained slurry composition for a positive electrode was measured by a B-type viscometer (rotation speed: 60 rpm) under a condition of 23°C and was evaluated by the following standard.

A lower viscosity at the same solid content concentration can be said to indicate that a positive electrode slurry composition having a homogeneous state and excellent stability is formed.
A: Less than 4,000 mPa·s
B: Not less than 4,000 mPa·s and less than 5,000 mPa·s
C: Not less than 5,000 mPa·s and less than 6,000 mPa·s
D: 6,000 mPa·s or more

### <Low-temperature output characteristics>

A secondary battery produced in each example or comparative example was charged to 4.3 V by a 0.2C constant-current method and subsequently discharged to 3.0 V at 0.2C with a temperature of 25°C, and the 0.2C discharge capacity was determined. Thereafter, the secondary battery was charged to 4.3 V at 0.2C and subsequently discharged to 3.0 V at 0.2C with a temperature of -10°C, and the 0.2C discharge capacity at -10°C was determined. These measurements were performed for 10 cells, and average values of the measured values were taken to be the 0.2C discharge capacity (a) at 25°C and the 0.2C discharge capacity (b) at -10°C. A capacity maintenance rate (100 × b/a (%)) expressed by the electric capacity ratio of the 0.2C discharge capacity (a) at 25°C and the 0.2C discharge capacity (b) at -10°C was determined and was adopted as an evaluation criterion for low-temperature output characteristics. A higher value indicates that a secondary battery has better low-temperature output characteristics.
A: 75% or more
B: Not less than 65% and less than 75%
C: Not less than 55% and less than 65%
D: Less than 55%

### <Cycle characteristics of secondary battery>

A secondary battery produced in each example or comparative example was left at rest in a 25°C environment for 24 hours after injection of electrolyte solution. The secondary battery was then subjected to a charge/discharge operation of charging to a cell voltage of 4.35 V and discharging to a cell voltage of 2.75 V by a 0.1C constant-current method, and the initial capacity C0 was measured. The secondary battery was then subjected to 100 charge/discharge cycles of charging to a cell voltage of 4.35 V and discharging to a cell voltage of 2.75 V by a 1.0C constant-current method in a 45°C environment, and the capacity C2 after 100 cycles was measured. A capacity maintenance rate C3 was calculated by a formula: C3(%) = (C2/C0) × 100. A larger value for C3 indicates that a secondary battery has better cycle characteristics.
A: Capacity maintenance rate C3 of 96% or more
B: Capacity maintenance rate C3 of not less than 90% and less than 96%
C: Capacity maintenance rate C3 of not less than 80% and less than 90%
D: Capacity maintenance rate C3 of less than 80%

### (Example 1)

### <Production of polymer>

A reactor was charged with 200 parts of deionized water, 25 parts of sodium dodecylbenzene sulfonate aqueous solution of 10% in concentration, 35 parts of acrylonitrile as a nitrile group-containing monomer, and 0.7 parts of t-dodecyl mercaptan as a chain transfer agent in this order. Next, gas inside of the reactor was purged three times with nitrogen, and then 65 parts of 1,3-butadiene was added as an aliphatic conjugated diene monomer. The reactor was held at 5°C while 0.03 parts of cumene hydroperoxide as a polymerization initiator and appropriate amounts of a reductant and a chelating agent were added and a polymerization reaction was continued under stirring. At the point at which the polymerization conversion rate reached 80%, 0.1 parts of hydroquinone aqueous solution of 10% in concentration was added as a polymerization inhibitor to stop the polymerization reaction. Next, residual monomer was removed at a water temperature of 80°C to yield a water dispersion of a polymer precursor.

The obtained water dispersion of the precursor and palladium catalyst (solution obtained through mixing of 1% palladium acetate acetone solution and an equivalent weight of deionized water) were added into an autoclave such that the palladium content was 3,000 ppm relative to the weight of solid content contained in the water dispersion. A hydrogenation reaction was performed at a hydrogen pressure of 3 MPa and a temperature of 50°C for 6 hours to yield a water dispersion of a target polymer. A portion of the obtained water dispersion of the polymer was sampled in order to measure the iodine value of the polymer. The result is shown in Table 1.

Next, the contents of the autoclave were restored to normal temperature, the system was converted to a nitrogen atmosphere, and then an evaporator was used to perform concentrating to a solid content concentration of 40% to yield a concentrate of the water dispersion.

Next, 200 parts of N-methylpyrrolidone (NMP) was added to 100 parts of the concentrate of the water dispersion, water and residual monomer were completely evaporated under reduced pressure, and then N-methylpyrrolidone was evaporated to yield an 8.0 mass% NMP solution of the polymer. The obtained NMP solution of the polymer was used to measure the weight-average molecular weight and sulfur content of the polymer. The results are shown in Table 1.

### <Production of binder composition>

A binder composition was obtained by mixing the 8.0 mass% NMP solution of the polymer obtained as described above and an 8.0 mass% NMP solution of a sodium naphthalene sulfonate formalin condensate (commercially available product) as an organic compound such that a mass ratio of the polymer and the organic compound (polymer/organic compound), in terms of solid content, was 90/10. Note that the commercially available product of a sodium naphthalene sulfonate formalin condensate in the above description was used in that form in production of the binder composition without performing operations such as separation and purification.

Also note that for the organic compound (sodium naphthalene sulfonate formalin condensate) used in the above description, the average number of aromatic hydrocarbon monocycles per one molecule of the organic compound, the average number of sulfur atom-containing functional groups per one molecule of the organic compound, and the weight-average molecular weight of the organic compound were measured. The results are shown in Table 1.

### <Production of surface-treated CNTs>

Multi-walled carbon nanotubes (bundle type; specific surface area: 300 m²/g) that had been weighed out in an amount of 1 g were added to a mixed solution of 40 mL of concentrated nitric acid and 40 mL of 2 M sulfuric acid and were stirred for 1 hour while being kept at 60°C (acid treatment). Thereafter, solid-liquid separation was performed by filtration using filter paper (Toyo Roshi Kaisha, Ltd.; Filter Paper No. 2, 125 mm). Solids on the filter paper were washed using 200 mL of purified water, and then CNT solids (acid-treated CNTs) were collected. These CNT solids were added into 200 mL of lithium hydroxide aqueous solution of 2.5 mol/L in concentration and were subsequently stirred for 2 hours while being kept at 25°C in a water bath (base treatment). Thereafter, solid-liquid separation was performed by vacuum filtration using a membrane filter having a pore diameter of 10 µm. CNT solids (acid/base-treated CNTs) on the membrane filter were repeatedly washed using purified water. Once the electrical conductivity of washing water reached 50 µS/m or less, solid-liquid separation of the CNT solids was performed by the same method as described above. The obtained CNT solids were dried under reduced pressure at 50°C for 8 hours to thereby produce surface-treated CNTs. The surface acid content, ratio of surface acid content relative to surface base content, and D/G ratio of these surface-treated CNTs are shown in Table 1. Note that these surface-treated CNTs had a BET specific surface area of 300 m²/g.

### <Production of conductive material dispersion liquid>

A conductive material dispersion liquid having a solid content concentration of 7.2 mass% was produced by using a disper blade to stir (3,000 rpm, 10 minutes) 6.0 parts of the surface-treated carbon nanotubes (bundle type; specific surface area: 300 m²/g) as a fibrous conductive material, 1.2 parts (in terms of solid content) of the binder composition, and 92.8 parts of NMP and subsequently using a bead mill in which zirconia beads of 1 mm in diameter were used to perform 1 hour of mixing at a circumferential speed of 8 m/s. Dispersibility was evaluated with respect to the obtained conductive material dispersion liquid. The results are shown in Table 1.

### <Production of slurry composition for secondary battery positive electrode>

In the conductive material dispersion liquid described above, 98.0 parts of a ternary active material having a layered structure (LiNi_{0.6}Co_{0.2}Mn_{0.2}O₂; average particle diameter: 10 µm) as a positive electrode active material, 1.0 parts of polyvinylidene fluoride as a binder, 1.0 parts (in terms of solid content) of the conductive material dispersion liquid, and NMP were added together and were mixed (60 rpm, 30 minutes) in a planetary mixer to produce a slurry composition for a positive electrode. Note that the additive amount of NMP was adjusted such that the viscosity of the obtained slurry composition for a positive electrode (measured by single-cylinder rotational viscometer in accordance with JIS Z8803: 1991; temperature: 25°C; rotation speed: 60 rpm) was within a range of 4,000 mPa·s to 5,000 mPa·s.

### <Formation of positive electrode>

Aluminum foil of 20 µm in thickness was prepared as a current collector. The slurry composition for a positive electrode obtained as described above was applied onto one side of the aluminum foil by a comma coater such as to have a coating weight after drying of 20 mg/cm², was dried at 90°C for 20 minutes and at 120°C for 20 minutes, and was then heat treated at 60°C for 10 hours to obtain a positive electrode web. This positive electrode web was rolled by roll pressing to produce a sheet-shaped positive electrode including the aluminum foil and a positive electrode mixed material layer of 3.2 g/cm³ in density. The sheet-shaped positive electrode was cut to 48.0 mm in width and 47 cm in length to obtain a positive electrode for a lithium ion secondary battery.

### <Production of negative electrode for lithium ion secondary battery>

A 5 MPa pressure-resistant vessel equipped with a stirrer was charged with 33 parts of 1,3-butadiene as an aliphatic conjugated diene monomer, 3.5 parts of itaconic acid as a carboxy group-containing monomer, 63.5 parts of styrene as an aromatic vinyl monomer, 0.4 parts of sodium dodecylbenzene sulfonate as an emulsifier, 150 parts of deionized water, and 0.5 parts of potassium persulfate as a polymerization initiator. These materials were thoroughly stirred and were then heated to 50°C so as to initiate polymerization. The polymerization reaction was quenched by cooling at the point at which the polymerization conversion rate reached 96% to yield a mixture containing a particulate binder (styrene-butadiene copolymer). The mixture was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing a binder for a negative electrode.

A planetary mixer was charged with 48.75 parts of artificial graphite and 48.75 parts of natural graphite as negative electrode active materials and 1 part (in terms of solid content) of carboxymethyl cellulose as a thickener. These materials were diluted to a solid content concentration of 60% with deionized water and were then kneaded at a rotation speed of 45 rpm for 60 minutes. Thereafter, 1.5 parts in terms of solid content of the water dispersion containing the binder for a negative electrode that was obtained as described above was added and kneaded therewith at a rotation speed of 40 rpm for 40 minutes. The viscosity was adjusted to 3,000 ± 500 mPa·s (measured by B-type viscometer at 25°C and 60 rpm) through addition of deionized water to produce a slurry composition for a negative electrode mixed material layer.

The slurry composition for a negative electrode mixed material layer was applied onto the surface of copper foil of 15 µm in thickness serving as a current collector by a comma coater such as to have a coating weight of 10 ± 0.5 mg/cm². The copper foil with the slurry composition for a negative electrode mixed material layer applied thereon was subsequently conveyed inside an oven having a temperature of 80°C for 2 minutes and an oven having a temperature of 110°C for 2 minutes at a speed of 400 mm/min so as to dry the slurry composition on the copper foil and obtain a negative electrode web having a negative electrode mixed material layer formed on the current collector.

This negative electrode web was rolled by roll pressing to produce a sheet-shaped negative electrode including the aluminum foil and a negative electrode mixed material layer of 1.6 g/cm³ in density. The sheet-shaped negative electrode was cut to 50.0 mm in width and 52 cm in length to obtain a negative electrode for a lithium ion secondary battery.

### <Production of lithium ion secondary battery>

The produced positive electrode for a lithium ion secondary battery and negative electrode for a lithium ion secondary battery were wound up with the respective electrode mixed material layers thereof facing each other and with a separator (microporous membrane made of polyethylene) of 15 µm in thickness interposed therebetween using a core of 20 mm in diameter so as to obtain a roll. The obtained roll was compressed to a thickness of 4.5 mm from one direction at a rate of 10 mm/s. Note that the compressed roll had an elliptical shape in plan view, and the ratio of the major axis to the minor axis (major axis/minor axis) was 7.7.

In addition, a LiPF₆ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) was prepared as an electrolyte solution.

Thereafter, the compressed roll was housed inside a laminate case made of aluminum together with 3.2 g of the electrolyte solution. After connecting a nickel lead at a specific location on the negative electrode for a secondary battery and connecting an aluminum lead at a specific location on the positive electrode for a secondary battery, an opening of the case was heat sealed to obtain a lithium ion secondary battery as the presently disclosed electrochemical device. This lithium ion secondary battery had a pouch shape of 35 mm in width, 60 mm in height, and 5 mm in thickness. The nominal capacity of the battery was 700 mAh.

Low-temperature output characteristics and cycle characteristics were evaluated for the obtained lithium ion secondary battery. The results are shown in Table 1.

### (Example 2)

A polymer, a binder composition, surface-treated CNTs, a conductive material dispersion liquid, a slurry composition for a positive electrode, a positive electrode, a negative electrode, and a lithium ion secondary battery were produced and various evaluations were performed in the same way as in Example 1 with the exception that a sodium naphthalene sulfonate formaldehyde condensate produced by the following method was used instead of DEMOL N produced by Kao Corporation as a sodium naphthalene sulfonate formalin condensate serving as an organic compound. The results are shown in Table 1.

### <Production of organic compound>

A reactor was charged with 1 mol of naphthalene, this naphthalene was heated to 120°C, and 1.15 mol (in terms of sulfuric acid) of 25% fuming sulfuric acid was added dropwise while also performing heating to 160°C and performing a reaction at 160°C for 3 hours to yield naphthalene sulfonic acid as a compound including both an aromatic hydrocarbon monocycle and a sulfur atom-containing functional group. The obtained naphthalene sulfonic acid was cooled to 90°C, 3 mol of water was added thereto, 1.0 mol (in terms of formaldehyde) of 37% formalin (aqueous solution containing formaldehyde) was added dropwise at 90°C while also performing heating to 100°C and performing a reaction for 25 hours, and then water was added to yield a condensate. The condensate was cooled to 40°C and was adjusted to pH 9 through equimolar addition of aqueous solutions of 24% sodium hydroxide and 24% potassium hydroxide. Water was removed from the resultant aqueous solution, NMP was then added to the resultant solid material, and the solid material was dissolved to yield an 8 mass% NMP solution of a formalin condensate of a sodium/potassium equimolar mixed salt of naphthalene sulfonic acid.

For the formalin condensate of a sodium/potassium equimolar mixed salt of naphthalene sulfonic acid that was obtained as an organic compound, the average number of aromatic hydrocarbon monocycles per one molecule of the organic compound, the average number of sulfur atom-containing functional groups per one molecule of the organic compound, and the weight-average molecular weight of the organic compound were measured. The results are shown in Table 1.

### (Example 3)

A polymer, a binder composition, surface-treated CNTs, a conductive material dispersion liquid, a slurry composition for a positive electrode, a positive electrode, a negative electrode, and a lithium ion secondary battery were produced and various evaluations were performed in the same way as in Example 1 with the exception that a sodium butyl naphthalene sulfonate formalin condensate (DEMOL SN-B produced by Kao Corporation) was used instead of a sodium naphthalene sulfonate formalin condensate (DEMOL N produced by Kao Corporation) as an organic compound. The results are shown in Table 1. Note that the commercially available product of a sodium butyl naphthalene sulfonate formalin condensate in the above description was used in that form in production of the binder composition without performing operations such as separation and purification.

Also note that for the organic compound (sodium butyl naphthalene sulfonate formalin condensate; commercially available product) used in the above description, the average number of aromatic hydrocarbon monocycles per one molecule of the organic compound, the average number of sulfur atom-containing functional groups per one molecule of the organic compound, and the weight-average molecular weight of the organic compound were measured. The results are shown in Table 1.

### (Examples 4 and 5)

A polymer, a binder composition, surface-treated CNTs, a conductive material dispersion liquid, a slurry composition for a positive electrode, a positive electrode, a negative electrode, and a lithium ion secondary battery were produced and various evaluations were performed in the same way as in Example 1 with the exception that in production of the polymer, the additive amount of t-dodecyl mercaptan as a chain transfer agent was adjusted so as to change the sulfur content and the weight-average molecular weight of the obtained polymer to values indicated in Table 1. The results are shown in Table 1.

Note that the sulfur content of the obtained polymer can be reduced and the weight-average molecular weight of the obtained polymer can be increased by reducing the additive amount of t-dodecyl mercaptan as a chain transfer agent, whereas the sulfur content of the obtained polymer can be increased and the weight-average molecular weight of the obtained polymer can be reduced by increasing the additive amount of t-dodecyl mercaptan as a chain transfer agent.

### (Examples 6 and 7)

A polymer, a binder composition, surface-treated CNTs, a conductive material dispersion liquid, a slurry composition for a positive electrode, a positive electrode, a negative electrode, and a lithium ion secondary battery were produced and various evaluations were performed in the same way as in Example 1 with the exception that the types and additive amounts of monomers added in production of the polymer were changed such that the chemical composition of the polymer (proportional content of each monomer unit) was as indicated in Table 1. The results are shown in Table 1.

### (Example 8)

A polymer, a binder composition, surface-treated CNTs, a conductive material dispersion liquid, a slurry composition for a positive electrode, a positive electrode, a negative electrode, and a lithium ion secondary battery were produced and various evaluations were performed in the same way as in Example 1 with the exception that the additive amount of the palladium catalyst in the hydrogenation reaction in production of the polymer was adjusted so as to change the iodine value of the polymer to a value indicated in Table 1. The results are shown in Table 1.

### (Examples 9 and 10)

A polymer, a binder composition, surface-treated CNTs, a conductive material dispersion liquid, a slurry composition for a positive electrode, a positive electrode, a negative electrode, and a lithium ion secondary battery were produced and various evaluations were performed in the same way as in Example 1 with the exception that in production of the binder composition, the mass ratio in which the polymer and the organic compound were added (polymer/organic compound) was changed as indicated in Table 1. The results are shown in Table 1.

### (Examples 11 and 12)

A polymer, a binder composition, surface-treated CNTs, a conductive material dispersion liquid, a slurry composition for a positive electrode, a positive electrode, a negative electrode, and a lithium ion secondary battery were produced and various evaluations were performed in the same way as in Example 1 with the exception that in production of the surface-treated CNTs, the treatment times of acid treatment and base treatment were changed such that values of the surface acid content, surface acid content/surface base content, and D/G value of the obtained surface-treated CNTs were as indicated in Table 2. The results are shown in Table 2.

### (Example 13)

A binder composition, surface-treated CNTs, a conductive material dispersion liquid, a slurry composition for a positive electrode, a positive electrode, a negative electrode, and a lithium ion secondary battery were produced and various evaluations were performed in the same way as in Example 1 with the exception that a polymer produced by the following method was used. The results are shown in Table 2.

### <Production method of polymer>

### <<Preparation of polymer intermediate>>

A reactor was charged with 180 parts of deionized water, 25 parts of sodium dodecylbenzene sulfonate (emulsifier for emulsion polymerization) aqueous solution of 10% in concentration, 35 parts of acrylonitrile as a nitrile group-containing monomer, and 0.8 parts of t-dodecyl mercaptan (mercaptan compound) as a molecular weight modifier in this order. Gas inside of the reactor was purged three times with nitrogen, and then 65 parts of 1,3-butadiene was added as an aliphatic conjugated diene monomer. The reactor was held at 10°C while 0.1 parts of cumene hydroperoxide (polymerization initiator) and 0.1 parts of ferrous sulfate were added and a polymerization reaction was continued under stirring. At the point at which the polymerization conversion rate reached 85%, 0.1 parts of hydroquinone aqueous solution of 10% in concentration (polymerization inhibitor) was added to stop the polymerization reaction. Next, residual monomer was removed at a water temperature of 80°C to yield a water dispersion of a polymer precursor (particulate polymer) (i.e., yield a latex of nitrile rubber). A portion of the obtained latex was added to an aqueous solution of magnesium sulfate in an amount of 12 mass% relative to nitrile rubber content and was stirred therewith to coagulate the latex. Thereafter, filtration was performed while also performing washing with water, and the resultant coagulated material was vacuum dried at a temperature of 60°C for 12 hours to obtain nitrile rubber that was an intermediate for a target polymer (i.e., a polymer intermediate).

### <<Metathesis of polymer intermediate>>

Next, 9 parts of the obtained nitrile rubber was dissolved in 141 parts of monochlorobenzene and was loaded into a reactor. The reactor was heated to 80°C, and then 2 L of a monochlorobenzene solution containing bis(tricyclohexylphosphine)benzylidene ruthenium dichloride as a Grubbs' catalyst was added such that the amount of the Grubbs' catalyst was 0.25 parts relative to 100 parts of polymer. The inside of the reactor was then pressurized to 3.5 MPa with ethylene as a co-olefin, and a metathesis reaction of the nitrile rubber was performed with a stirring speed of 600 rpm. During the reaction, the temperature was maintained constant using a cooling coil connected to a temperature controller and a heat sensor.

### <<Hydrogenation of metathesized polymer intermediate>>

Next, the inside of the reactor was degassed three times with 0.7 MPa hydrogen (H₂) while continuing stirring. The temperature of the reactor was then raised to 130°C, and 1 L of a monochlorobenzene solution containing Wilkinson's catalyst and triphenylphosphine was added into the reactor. Note that the amount of the Wilkinson's catalyst was set as 0.075 parts and the amount of triphenylphosphine was set as 1 part relative to 100 parts of the metathesized polymer intermediate. Next, the temperature was raised to 138°C, and a polymer hydrogenation reaction was performed for 6 hours under a condition of a hydrogen pressure of 8.4 MPa to yield a target polymer that was a hydrogenated polymer. After the reaction had ended, the reactor was charged with 0.2 parts of activated carbon having an average diameter of 15 µm and was stirred for 30 minutes. Thereafter, filtration was performed using a filter having a pore diameter of 5 µm to obtain a monochlorobenzene solution of the polymer as a filtrate.

The obtained monochlorobenzene solution of the polymer was used to measure the iodine value of the polymer. The result is shown in Table 1.

### <<Production of NMP solution of polymer>>

A mixture was obtained by sampling 50 parts (equivalent to 3 parts of solid content) of the monochlorobenzene solution of the polymer obtained as described above and mixing 34.5 parts of N-methylpyrrolidone (NMP) therewith as a solvent. Next, monochlorobenzene contained in the obtained mixture was completely evaporated under reduced pressure to obtain an 8 mass% NMP solution of the polymer. The obtained NMP solution of the polymer was used to measure the weight-average molecular weight and sulfur content of the polymer. The results are shown in Table 1.

### (Example 14)

A binder composition, surface-treated CNTs, a conductive material dispersion liquid, a slurry composition for a positive electrode, a positive electrode, a negative electrode, and a lithium ion secondary battery were produced and various evaluations were performed in the same way as in Example 11 with the exception that the polymer produced in Example 13 described above was used. The results are shown in Table 2.

### (Example 15)

A binder composition, surface-treated CNTs, a conductive material dispersion liquid, a slurry composition for a positive electrode, a positive electrode, a negative electrode, and a lithium ion secondary battery were produced and various evaluations were performed in the same way as in Example 12 with the exception that the polymer produced in Example 13 described above was used. The results are shown in Table 2.

### (Example 16)

A polymer, a binder composition, surface-treated CNTs, a conductive material dispersion liquid, a slurry composition for a positive electrode, a positive electrode, a negative electrode, and a lithium ion secondary battery were produced and various evaluations were performed in the same way as in Example 1 with the exception that a sodium salt of a polymer (sodium vinylnaphthalene-allyl sulfonate copolymer) produced by the following method was used instead of a sodium naphthalene sulfonate formalin condensate (DEMOL N produced by Kao Corporation) as an organic compound. The results are shown in Table 2.

### <Production of organic compound>

A 1 L flask made of glass was charged with 100 parts of deionized water, 500 parts of tertiary butanol, and 200 parts of toluene. These materials were heated to a temperature of 60°C, and the inside of the flask was purged with nitrogen gas at a flow rate of 100 mL/min. Next, a mixture obtained by mixing 21 parts of 1-vinylnaphthalene as a monomer including an aromatic hydrocarbon monocycle and 79 parts of allyl sulfonic acid as a monomer including a sulfur atom-containing functional group was injected into the flask. The mixture was subjected to nitrogen bubbling (conditions of 40 minutes at flow rate of 1 L/min), and then 500 parts (25 parts in terms of solid content of V-70) of a 5% acetonitrile solution of 2,2'-azobis(2,4-dimethyl-4-methoxy)valeronitrile (V-70 produced by FUJIFILM Wako Pure Chemical Corporation) was added into the flask as a polymerization initiator to initiate a polymerization reaction.

At 2 hours after the start of the reaction, the temperature was raised to 75°C and was held at 75°C so as to cause the polymerization reaction to progress. At 4 hours after addition of the polymerization initiator, the flask was opened to air to end the polymerization reaction. The produced polymer was caused to precipitate in acetone. The resultant precipitate was adjusted to pH 8.0 through addition of a 10% aqueous solution of sodium hydroxide while performing 6 hours of stirring at a temperature of 80°C to yield a sodium salt of a polymer (sodium vinylnaphthalene-allyl sulfonate copolymer) as an organic compound.

The sodium salt of the polymer obtained as an organic compound was used to measure the average number of aromatic hydrocarbon monocycles per one molecule of the organic compound, the average number of sulfur atom-containing functional groups per one molecule of the organic compound, and the weight-average molecular weight of the organic compound. The results are shown in Table 2.

### (Example 17)

A polymer, a binder composition, surface-treated CNTs, a conductive material dispersion liquid, a slurry composition for a positive electrode, a positive electrode, a negative electrode, and a lithium ion secondary battery were produced and various evaluations were performed in the same way as in Example 1 with the exception that production of the polymer and production of the binder composition were performed by the following methods. The results are shown in Table 2.

### <Production of polymer>

A concentrate (solid content concentration: 40%) of a water dispersion of a polymer was obtained by the same operations as in production of a polymer in Example 1.

Next, the water dispersion of the polymer was added dropwise into methanol to cause coagulation of the polymer, and coagulated material of the polymer was then vacuum dried at a temperature of 60°C for 12 hours.

### <Production of binder composition>

A dry binder composition that did not contain a solvent was obtained by mixing 90 parts of the obtained polymer, 10 parts of sodium naphthalene sulfonate (DEMOL N produced by Kao Corporation) as an organic compound, and an appropriate amount of a Si-containing additive at 50°C in a Banbury mixer.

The obtained dry composition was cut up and was dissolved in NMP to produce an NMP solution having a solid content concentration of 8% as a liquid binder composition. Moreover, the obtained liquid binder composition was used to produce a conductive material dispersion liquid.

Note that when the Si concentration in the liquid binder composition was measured by ICP-MS, the Si concentration was confirmed to be within a range of 1 ppm to 1,000 ppm.

### (Comparative Example 1)

A polymer, a binder composition, surface-treated CNTs, a conductive material dispersion liquid, a slurry composition for a positive electrode, a positive electrode, a negative electrode, and a lithium ion secondary battery were produced and various evaluations were performed in the same way as in Example 1 with the exception that in production of the binder composition, the 8.0 mass% NMP solution of the polymer was used in that form as the binder composition without adding a sodium naphthalene sulfonate formalin condensate as an organic compound. The results are shown in Table 2.

### (Comparative Example 2)

A polymer, a binder composition, surface-treated CNTs, a conductive material dispersion liquid, a slurry composition for a positive electrode, a positive electrode, a negative electrode, and a lithium ion secondary battery were produced and various evaluations were performed in the same way as in Example 1 with the exception that in production of the binder composition, the 8.0 mass% NMP solution of the polymer was used in that form as the binder composition to produce the conductive material dispersion liquid without adding a sodium naphthalene sulfonate formalin condensate as an organic compound, and that in production of the slurry composition for a positive electrode, a sodium naphthalene sulfonate formalin condensate (commercially available product) was added as an organic compound such that a mass ratio of the polymer and the organic compound (polymer/organic compound), in terms of solid content, was 90/10. The results are shown in Table 2.

Note that the commercially available product of a sodium naphthalene sulfonate formalin condensate in the above description was used in that form in production of the slurry composition for a positive electrode without performing operations such as separation and purification.

### (Comparative Example 3)

A binder composition, surface-treated CNTs, a conductive material dispersion liquid, a slurry composition for a positive electrode, a positive electrode, a negative electrode, and a lithium ion secondary battery were produced and various evaluations were performed in the same way as in Example 1 with the exception that in production of the binder composition, an 8.0 mass% NMP solution of a sodium naphthalene sulfonate formalin condensate (commercially available product) as an organic compound, an 8.0 mass% NMP solution of an isothiazoline-based compound (1,2-benzisothiazolin-3-one), and an 8.0 mass% NMP solution of sodium p-toluene sulfonate were mixed in a mass ratio (organic compound/isothiazoline-based compound/sodium p-toluene sulfonate) of 10/0.5/0.5 to obtain the binder composition without adding an 8.0 mass% NMP solution of a polymer. The results are shown in Table 2.

Note that the commercially available product of a sodium naphthalene sulfonate formalin condensate in the above description was used in that form in production of the binder composition without performing operations such as separation and purification.

### (Comparative Example 4)

A binder composition, surface-treated CNTs, a conductive material dispersion liquid, a slurry composition for a positive electrode, a positive electrode, a negative electrode, and a lithium ion secondary battery were produced and various evaluations were performed in the same way as in Example 1 with the exception that in production of the binder composition, an 8.0 mass% NMP solution of polyvinylpyrrolidone (weight-average molecular weight: 10,000) as a polymer and an 8.0 mass% NMP solution of a sodium naphthalene sulfonate formalin condensate (commercially available product) as an organic compound were mixed in a mass ratio (polymer/organic compound) of 90/10 to obtain the binder composition. The results are shown in Table 2.

Note that the commercially available product of a sodium naphthalene sulfonate formalin condensate in the above description was used in that form in production of the binder composition without performing operations such as separation and purification.

In Tables 1 and 2, shown below:
"AN" indicates acrylonitrile unit;
"BD" indicates structural unit derived from 1,3-butadiene (1,3-butadiene unit and/or hydrogenated 1,3-butadiene unit);
"BA" indicates n-butyl acrylate unit;
"ST" indicates styrene unit;
"BIT" indicates 1,2-benzisothiazolin-3-one;
"PTS" indicates sodium p-toluene sulfonate;
"PVP" indicates polyvinylpyrrolidone;
"NaSF" indicates sodium naphthalene sulfonate formalin condensate or formalin condensate of sodium/potassium equimolar mixed salt of naphthalene sulfonic acid;
"BNaSF" indicates sodium butyl naphthalene sulfonate formalin condensate; and
"VNa-AS" indicates sodium vinylnaphthalene-allyl sulfonate copolymer.

**[Table 1]**

| | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Polymer | Chemical composition | Nitrile group-containing monomer units | AN [mass%] | 35 | 35 | 35 | 35 | 35 | 25 | 25 | 35 | 35 | 35 |
| | | Aliphatic conjugated diene monomer units and alkylene structural units | BD [mass%] | 65 | 65 | 65 | 65 | 65 | 65 | 65 | 65 | 65 | 65 |
| | | Other monomer units | BA [mass%] | - | - | - | - | - | 10 | - | - | - | - |
| | | | ST [mass%] | - | - | - | - | - | - | 10 | - | - | - |
| | Weight-average molecular weight [×10³] | | | 120 | 120 | 120 | 25 | 250 | 120 | 120 | 120 | 120 | 120 |
| | Sulfur content [ppm] | | | 900 | 900 | 900 | 6000 | 600 | 900 | 900 | 900 | 900 | 900 |
| | Iodine value [mg/100 mg] | | | 10 | 10 | 10 | 10 | 10 | 10 | 10 | 65 | 10 | 10 |
| Organic compound | Type | | | NaSF | NaSF | BNaSF | NaSF | NaSF | NaSF | NaSF | NaSF | NaSF | NaSF |
| | Weight-average molecular weight | | | 750 | 1900 | 1000 | 750 | 750 | 750 | 750 | 750 | 750 | 750 |
| | Mass ratio (polymer/organic compound) | | | 90/10 | 90/10 | 90/10 | 90/10 | 90/10 | 90/10 | 90/10 | 90/10 | 65/35 | 995/5 |
| | Average number of aromatic hydrocarbon monocycles per one molecule | | | 6 | 14 | 6 | 6 | 6 | 6 | 6 | 6 | 6 | 6 |
| | Average number of sulfur atom-containing functional groups per one molecule | | | 3 | 7 | 3 | 3 | 3 | 3 | 3 | 3 | 3 | 3 |
| | Timing of addition | In production of binder composition | | Added | Added | Added | Added | Added | Added | Added | Added | Added | Added |
| | | In production of slurry composition for positive electrode | | - | - | - | - | - | - | - | - | - | - |
| Fibrous conductive material | Type | | | CNT | CNT | CNT | CNT | CNT | CNT | CNT | CNT | CNT | CNT |
| | Surface acid content [mmol/g] | | | 0.02 | 0.02 | 0.02 | 0.02 | 0.02 | 0.02 | 0.02 | 0.02 | 0.02 | 0.02 |
| | Surface acid content/Surface base content | | | 0.3 | 0.3 | 0.3 | 0.3 | 0.3 | 0.3 | 0.3 | 0.3 | 0.3 | 0.3 |
| | D/G ratio | | | 1.1 | 1.1 | 1.1 | 1.1 | 1.1 | 1.1 | 1.1 | 1.1 | 1.1 | 1.1 |
| | BET specific surface area [m²/g] | | | 300 | 300 | 300 | 300 | 300 | 300 | 300 | 300 | 300 | 300 |
| Evaluation results | Initial dispersion viscosity of conductive material dispersion liquid | | | A | B | A | A | B | A | B | B | A | A |
| | Initial dispersion TI value of conductive material dispersion liquid | | | A | B | B | A | B | B | B | B | B | B |
| | Viscosity (stability) of slurry composition for positive electrode | | | A | B | A | A | A | A | A | B | B | B |
| | Low-temperature output characteristics of secondary battery | | | A | B | A | B | A | A | A | A | B | B |
| | Cycle characteristics of secondary battery | | | A | A | A | A | A | A | A | B | B | A |

**[Table 2]**

| | | | | Example 11 | Example 12 | Example 13 | Example 14 | Example 15 | Example 16 | Example 17 | Comparative Example 1 | Comparative Example 2 | Comparative Example 3 | Comparative Example 4 |
|---|---|---|---|---|---|---|---|---|---|---|---|---|---|---|
| Polymer | Chemical composition | Nitrile group-containing monomer units | AN [mass%] | 35 | 35 | 35 | 35 | 35 | 35 | 35 | 35 | 35 | BIT PTS | PVP |
| | | Aliphatic conjugated diene monomer units and alkylene structural units | BD [mass%] | 65 | 65 | 65 | 65 | 65 | 65 | 65 | 65 | 65 | | |
| | | Other monomer units | BA [mass%] | - | - | - | - | - | - | - | - | - | | |
| | | | ST [mass%] | - | - | - | - | - | - | - | - | - | | |
| | Weight-average molecular weight [×10³] | | | 120 | 120 | 25 | 25 | 25 | 120 | 120 | 120 | 120 | | 10 |
| | Sulfur content [ppm] | | | 900 | 900 | 0 | 0 | 0 | 900 | 900 | 900 | 900 | | - |
| | Iodine value [mg/100 mg] | | | 10 | 10 | 10 | 10 | 10 | 10 | 10 | 10 | 10 | | - |
| Organic compound | Type | | | NaSF | NaSF | NaSF | NaSF | NaSF | VNa-AS | NaSF | - | NaSF | NaSF | NaSF |
| | Weight-average molecular weight | | | 750 | 750 | 750 | 750 | 750 | 1600 | 750 | - | 750 | 750 | 750 |
| | Mass ratio (polymer/organic compound) | | | 90/10 | 90/10 | 90/10 | 90/10 | 90/10 | 90/10 | 90/10 | - | 90/10 | - | 90/10 |
| | Average number of aromatic hydrocarbon monocycles per one molecule | | | 6 | 6 | 6 | 6 | 6 | 5 | 6 | - | 6 | 6 | 6 |
| | Average number of sulfur atom-containing functional groups per one molecule | | | 3 | 3 | 3 | 3 | 3 | 10 | 3 | - | 3 | 3 | 3 |
| | Timing of addition | In production of binder composition | | Added | Added | Added | Added | Added | Added | Added | - | - | Added | Added |
| | | In production of slurry composition for positive electrode | | - | - | - | - | - | - | - | - | Added | - | - |
| Fibrous conductive material | Type | | | CNT | CNT | CNT | CNT | CNT | CNT | CNT | CNT | CNT | CNT | CNT |
| | Surface acid content [mmol/g] | | | 0.1 | 0.3 | 0.02 | 0.1 | 0.3 | 0.02 | 0.02 | 0.02 | 0.02 | 0.02 | 0.02 |
| | Surface acid content/Surface base content | | | 1.3 | 2.0 | 0.3 | 1.3 | 2.0 | 0.3 | 0.3 | 0.3 | 0.3 | 0.3 | 0.3 |
| | D/G ratio | | | 0.6 | 1.6 | 1.1 | 0.6 | 1.6 | 1.1 | 1.1 | 1.1 | 1.1 | 1.1 | 1.1 |
| | BET specific surface area [m²/g] | | | 300 | 300 | 300 | 300 | 300 | 300 | 300 | 300 | 300 | 300 | 300 |
| Evaluation results | Initial dispersion viscosity of conductive material dispersion liquid | | | A | B | A | B | B | B | A | B | B | C | D |
| | Initial dispersion TI value of conductive material dispersion liquid | | | B | B | B | B | C | B | A | C | C | D | D |
| | Viscosity (stability) of slurry composition for positive electrode | | | A | B | A | B | B | B | A | C | D | D | D |
| | Low-temperature output characteristics of secondary battery | | | A | B | B | B | B | B | A | C | D | D | D |
| | Cycle characteristics of secondary battery | | | A | B | A | A | B | B | A | C | C | C | D |

It can be seen from Tables 1 and 2 that when the binder compositions of Examples 1 to 17, which contain the specific polymer and the specific organic compound, are used to produce a conductive material dispersion liquid and a slurry composition for a positive electrode and to form a positive electrode, it is possible to cause an electrochemical device including this positive electrode to display excellent low-temperature output characteristics.

In contrast, it can be seen that when the binder composition of Comparative Example 1, which does not contain the specific organic compound, is used to produce a conductive material dispersion liquid and a slurry composition for a positive electrode and to form a positive electrode, an electrochemical device including this positive electrode has poor low-temperature output characteristics.

It can also be seen that even when the binder composition of Comparative Example 2, which does not contain the specific organic compound, is used to produce a conductive material dispersion liquid and then the obtained conductive material dispersion liquid and the specific organic compound are used to produce a slurry composition for a positive electrode and to form a positive electrode, an electrochemical device including this positive electrode has poor low-temperature output characteristics.

It can also be seen that when the binder compositions of Comparative Examples 3 and 4, which do not contain the specific polymer, are used to produce a conductive material dispersion liquid and a slurry composition for a positive electrode and to form a positive electrode, an electrochemical device including the positive electrode has poor low-temperature output characteristics.

### INDUSTRIAL APPLICABILITY

According to the present disclosure, it is possible to provide a binder composition for an electrochemical device positive electrode, a conductive material dispersion liquid for an electrochemical device positive electrode, and a slurry composition for an electrochemical device positive electrode that are capable of forming a positive electrode that can cause an electrochemical device to display excellent low-temperature output characteristics.

Moreover, according to the present disclosure, it is possible to provide an electrochemical device that can display excellent low-temperature output characteristics.

## Claims

1. A binder composition for an electrochemical device positive electrode comprising a polymer and an organic compound, wherein
the polymer includes a nitrile group-containing monomer unit and an alkylene structural unit, and
the organic compound includes not fewer than 2 and not more than 15 aromatic hydrocarbon monocycles and not fewer than 2 and not more than 15 sulfur atom-containing functional groups, on average, per one molecule.

2. The binder composition for an electrochemical device positive electrode according to claim 1, further comprising a solvent.

3. The binder composition for an electrochemical device positive electrode according to claim 1, wherein the polymer has a weight-average molecular weight of 500,000 or less.

4. The binder composition for an electrochemical device positive electrode according to claim 1, wherein the polymer has a sulfur content of 500 mass ppm or more.

5. The binder composition for an electrochemical device positive electrode according to claim 1, wherein the sulfur atom-containing functional groups include either or both of a sulfonic acid group and a salt thereof.

6. The binder composition for an electrochemical device positive electrode according to claim 1, wherein the organic compound has a weight-average molecular weight of 5,000 or less.

7. The binder composition for an electrochemical device positive electrode according to claim 1, wherein a mass ratio of the polymer and the organic compound, in terms of polymer/organic compound, is not less than 60/40 and not more than 999/1.

8. A conductive material dispersion liquid for an electrochemical device positive electrode comprising: a fibrous conductive material; a dispersion medium; and the binder composition for an electrochemical device positive electrode according to any one of claims 1 to 7.

9. The conductive material dispersion liquid for an electrochemical device positive electrode according to claim 8, wherein the fibrous conductive material is a fibrous carbon material, and the fibrous carbon material has a ratio of D band peak intensity relative to G band peak intensity of 2.0 or less in a Raman spectrum.

10. The conductive material dispersion liquid for an electrochemical device positive electrode according to claim 8, wherein the fibrous conductive material is of a bundle type.

11. The conductive material dispersion liquid for an electrochemical device positive electrode according to claim 8, wherein the fibrous conductive material has a surface acid content of not less than 0.01 mmol/g and not more than 0.20 mmol/g.

12. The conductive material dispersion liquid for an electrochemical device positive electrode according to claim 8, wherein a ratio of surface acid content relative to surface base content of the fibrous conductive material, in terms of surface acid content/surface base content, is not less than 0.10 and not more than 2.5.

13. A slurry composition for an electrochemical device positive electrode comprising: the conductive material dispersion liquid for an electrochemical device positive electrode according to claim 8; and a positive electrode active material.

14. The slurry composition for an electrochemical device positive electrode according to claim 13, further comprising a binder other than the polymer.

15. A positive electrode for an electrochemical device comprising a positive electrode mixed material layer formed using the slurry composition for an electrochemical device positive electrode according to claim 13.

16. An electrochemical device comprising the positive electrode for an electrochemical device according to claim 15.
